(19) Europäisches Patentamt
European Patent Office
Office européen des brevets

(11) EP 4 223 417 A1

(12) **EUROPEAN PATENT APPLICATION**
published in accordance with Art. 153(4) EPC

(43) Date of publication:
**09.08.2023 Bulletin 2023/32**

(21) Application number: **21875430.7**

(22) Date of filing: **24.09.2021**

(51) International Patent Classification (IPC):
***B01J 37/02** (2006.01)* ***B01J 21/16** (2006.01)*
***B01J 23/755** (2006.01)* ***C25B 11/00** (2021.01)*
***C25B 11/073** (2021.01)* ***C25B 9/00** (2021.01)*

(52) Cooperative Patent Classification (CPC):
**B01J 21/16; B01J 23/755; B01J 37/02; C25B 9/00; C25B 11/00; C25B 11/073**

(86) International application number:
**PCT/JP2021/035121**

(87) International publication number:
**WO 2022/071128 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.10.2020 JP 2020167904**

(71) Applicant: **Panasonic Intellectual Property Management Co., Ltd.**
**Osaka-shi, Osaka 540-6207 (JP)**

(72) Inventors:
- **SHIRATAKI, Hiroshi**
  **Osaka-shi, Osaka 540-6207 (JP)**
- **MURASE, Hideaki**
  **Osaka-shi, Osaka 540-6207 (JP)**
- **HAYASHI, Takao**
  **Osaka-shi, Osaka 540-6207 (JP)**
- **SUZUKA, Michio**
  **Osaka-shi, Osaka 540-6207 (JP)**

(74) Representative: **Grünecker Patent- und Rechtsanwälte**
**PartG mbB**
**Leopoldstraße 4**
**80802 München (DE)**

(54) **ELECTRODE CATALYST INK FOR WATER ELECTROLYSIS CELLS, ELECTRODE CATALYST, WATER ELECTROLYSIS CELL, AND WATER ELECTROLYSIS DEVICE**

(57) The electrode catalyst ink (1) for a water electrolysis cell includes a catalyst (10) including a layered double hydroxide, an organic polymer (11), and a solvent (12). The Hansen solubility parameter distance $R_{a1}$ between the solvent (12) and the catalyst (10) is 15.0 $MPa^{1/2}$ or more and less than 20.5 $MPa^{1/2}$. The Hansen solubility parameter distance $R_{a2}$ between the solvent (12) and the organic polymer (11) is 10.0 $MPa^{1/2}$ or more and 14.0 $MPa^{1/2}$ or less.

FIG. 11

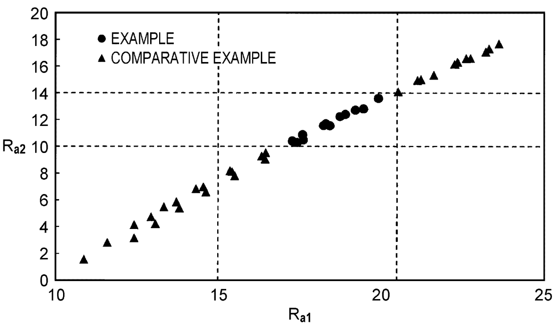


EP 4 223 417 A1

Processed by Luminess, 75001 PARIS (FR)

## Description

### Technical Field

The present disclosure relates to an electrode catalyst ink of a water electrolysis cell, an electrode catalyst, a water electrolysis cell, and a water electrolyzer.

### Background Art

It has been known to form an electrode catalyst by using an electrode catalyst ink. For example, PTL 1 discloses a method for selecting an additive solvent of an electrode catalyst ink for a fuel battery.

Furthermore, recently, the development of a catalyst material that is used in a water electrolyzer is expected.

### Citation List

### Patent Literature

PTL 1: Japanese Unexamined Patent Application Publication No. 2017-142931

### Summary of Invention

### Technical Problem

The present disclosure provides an electrode catalyst ink of a water electrolysis cell having excellent dispersibility.

### Solution to Problem

The present disclosure provides an electrode catalyst ink for a water electrolysis cell, the electrode catalyst ink including:

a catalyst including a layered double hydroxide;
an organic polymer; and
a solvent, wherein
the Hansen solubility parameter distance $R_{a1}$ between the solvent and the catalyst is 15.0 $MPa^{1/2}$ or more and less than 20.5 $MPa^{1/2}$, and the Hansen solubility parameter distance $R_{a2}$ between the solvent and the organic polymer is 10.0 $MPa^{1/2}$ or more and 14.0 $MPa^{1/2}$ or less.

### Advantageous Effects of Invention

According to the present disclosure, it is possible to provide an electrode catalyst ink of a water electrolysis cell, the ink having excellent dispersibility.

### Brief Description of Drawings

[Fig. 1] Fig. 1 is a diagram schematically illustrating an electrode catalyst ink according to a first embodiment.
[Fig. 2] Fig. 2 is a diagram illustrating the concepts of, in a Hansen solubility parameter (HSP) space, the HSP value of a catalyst, the HSP value of an organic polymer, the HSP value of a solvent, an HSP distance $R_{a1}$, and an HSP distance $R_{a2}$.
[Fig. 3] Fig. 3 is a diagram schematically illustrating an example of the crystal structure of a layered double hydroxide (LDH).
[Fig. 4] Fig. 4 is a diagram schematically illustrating another example of the electrode catalyst ink according to the first embodiment.
[Fig. 5] Fig. 5 is a cross-sectional view schematically illustrating an example of a water electrolysis cell according to a second embodiment.
[Fig. 6] Fig. 6 is a cross-sectional view schematically illustrating an example of a water electrolyzer according to a

third embodiment.

[Fig. 7] Fig. 7 is a cross-sectional view schematically illustrating an example of a water electrolysis cell according to a fourth embodiment.

[Fig. 8] Fig. 8 is a cross-sectional view schematically illustrating an example of a water electrolyzer according to a fifth embodiment.

[Fig. 9] Fig. 9 is a diagram showing a photograph of an electrode catalyst ink for evaluation of dispersibility according to Example 4.

[Fig. 10] Fig. 10 is a diagram showing a photograph of an electrode catalyst ink for evaluation of dispersibility according to Comparative Example 10.

[Fig. 11] Fig. 11 is a graph showing a relationship between HSP distance $R_{a1}$ and HSP distance $R_{a2}$ in electrode catalyst inks according to Examples and Comparative Examples.

Description of Embodiments

<Underlying knowledge forming bases of the present disclosure>

As global warming countermeasures, the use of renewable energy, such as solar light and wind power, is attracting attention. However, power generation by renewable energy causes a problem of wasting surplus power. Consequently, the utilization efficiency of renewable energy is not necessarily sufficient. Accordingly, methods for manufacturing hydrogen from surplus power and storing it are being studied.

As a method for manufacturing hydrogen from surplus power, generally, electrolysis of water can be used. Electrolysis of water is also called water electrolysis. In order to manufacture hydrogen inexpensively and stably, the development of a highly efficient and long life water electrolyzer is demanded. As a main component of the water electrolyzer, a membrane electrode assembly (MEA) consisting of a gas diffusion layer, an electrode catalyst layer, and an electrolyte membrane is mentioned.

In order to manufacture the membrane electrode assembly, it is considered to prepare an electrode catalyst ink for water electrolysis. For example, as the electrode catalyst ink for water electrolysis, a liquid mixture in which a catalyst material and an organic polymer are dispersed in two or more solvents, such as water and an organic solvent, is used. That is, a liquid mixture in which a catalyst material and an organic polymer are dispersed in a mixed solvent is used as an electrode catalyst ink. In order to produce an electrode catalyst layer of a membrane electrode assembly by using an electrode catalyst ink, for example, the electrode catalyst ink is applied to an electrolyte membrane or a gas diffusion layer. Examples of the method for applying the electrode catalyst ink to an electrolyte membrane or a gas diffusion layer are a spray method, a die coat method, a slit coat method, a dip method, and an inkjet method. Consequently, an electrode catalyst layer including the electrode catalyst is obtained in at least one of the anode or the cathode.

In the electrode catalyst ink, for example, the apparent particle diameter of the catalyst material is increased by aggregation of the catalyst material, such as the catalyst or the organic polymer. Consequently, for example, when an electrode catalyst ink is applied to an electrolyte membrane or a gas diffusion layer by an ink jet method, clogging of the nozzle of the apparatus occurs. In addition, if the catalyst material aggregates in the electrode catalyst ink, it is difficult to adjust the film thickness of the electrode catalyst layer evenly. As these results, there are risks of a variation in electrode performance, an increase in the manufacturing cost of the electrode catalyst, and a reduction in the productivity of the electrode catalyst. Accordingly, it is important to prevent the catalyst material from aggregating in the electrode catalyst ink. In other words, it is important that the solvent included in the electrode catalyst ink is designed to have appropriate affinity to the catalyst and the catalyst material, such as an organic polymer.

An increase in the apparent particle diameter of the catalyst material highly affects the dispersibility of the catalyst material in the electrode catalyst ink. Here, the relationship between the particle diameter and the sedimentation velocity of a catalyst material can be evaluated by, for example, the following Stokes equation (1):

[Math. 1]

$$v = \frac{(\rho_s - \rho_w)g}{72\eta} r^2 \quad \text{Equation (1).}$$

In the equation (1), v is the sedimentation velocity, $\rho_s$ is the density of the particle, $\rho_w$ is the density of the solvent, g is the gravitational acceleration, $\eta$ is the viscosity of the solvent, and r is the radius of the particle.

According to the equation (1), the sedimentation velocity increases with an increase in the apparent particle diameter of the catalyst material included in the electrode catalyst ink. That is, the dispersibility of the catalyst material in the electrode catalyst ink decreases with an increase in the apparent particle diameter of the catalyst material included

in the electrode catalyst ink. Accordingly, in the electrode catalyst ink, it is hard to say that an increase in the apparent particle diameter of the catalyst material is advantageous from the viewpoint of improving the electrode performance. Accordingly, the present inventors diligently studied about electrode catalyst inks having excellent dispersibility. As a result, it has been newly found that a predetermined relationship between a component and a solvent included in an electrode catalyst ink is advantageous for the electrode catalyst ink to have excellent dispersibility.

<Outline of one aspect according to the present disclosure>

The electrode catalyst ink for a water electrolysis cell according to a 1st aspect of the present disclosure includes:

a catalyst including a layered double hydroxide;
an organic polymer; and
a solvent, wherein
the Hansen solubility parameter distance $R_{a1}$ between the solvent and the catalyst is 15.0 $MPa^{1/2}$ or more and less than 20.5 $MPa^{1/2}$, and the Hansen solubility parameter distance $R_{a2}$ between the solvent and the organic polymer is 10.0 $MPa^{1/2}$ or more and 14.0 $MPa^{1/2}$ or less.

According to the 1st aspect, an electrode catalyst ink of a water electrolysis cell having excellent dispersibility can be provided.
In a 2nd aspect of the present disclosure, for example, in the electrode catalyst ink for the water electrolysis cell according to the 1st aspect, the layered double hydroxide may include Ni and Fe. According to the 2nd aspect, the electrode catalyst is likely to more certainly have an excellent catalyst activity.
In a 3rd aspect of the present disclosure, for example, the electrode catalyst ink for the water electrolysis cell according to the 1st or 2nd aspect may further include a carrier supporting the catalyst, and the carrier may include a transition metal. According to the 3rd aspect, the catalyst activity of the electrode catalyst is likely to be maintained high.
In a 4th aspect of the present disclosure, for example, in the electrode catalyst ink for the water electrolysis cell according to the 3rd aspect, the transition metal may include Ni. According to the 4th aspect, the electrode catalyst is likely to more certainly have an excellent catalyst activity.
In a 5th aspect of the present disclosure, for example, in the electrode catalyst ink for the water electrolysis cell according to any one of the 1st to 4th aspects, the organic polymer may include a perfluorocarbon polymer having a sulfonate ion group. According to the 5th aspect, the durability of the electrode catalyst can be more certainly improved.
In a 6th aspect of the present disclosure, for example, in the electrode catalyst ink for the water electrolysis cell according to any one of the 1st to 5th aspects, the solvent may include water and an alcohol. According to the 6th aspect, an electrode catalyst ink of a water electrolysis cell more certainly having excellent dispersibility can be provided.
In a 7th aspect of the present disclosure, for example, in the electrode catalyst ink for the water electrolysis cell according to the 6th aspect, the ratio of the volume of the water to the volume of the alcohol in the solvent may be 0.80 or more and 1.80 or less. According to the 7th aspect, an electrode catalyst ink of a water electrolysis cell more certainly having excellent dispersibility can be provided.
The electrode catalyst according to an 8th aspect of the present disclosure includes:
a solidified product of the electrode catalyst ink for the water electrolysis cell according to any one of the 1st to 7th aspects.
According to the 8th aspect, the electrode catalyst is likely to have a low overvoltage.
The water electrolysis cell according to a 9th aspect of the present disclosure includes:

an anode;
a cathode; and
an electrolyte membrane disposed between the anode and the cathode,
wherein at least one selected from the group consisting of the anode and the cathode includes the electrode catalyst according to the 8th aspect.

According to the 9th aspect, the water electrolysis cell is likely to have a low overvoltage.
In a 10th aspect of the present disclosure, for example, in the water electrolysis cell according to the 9th aspect, the electrolyte membrane may include an anion exchange membrane. According to the 10th aspect, the oxygen gas generated at the anode and the hydrogen gas generated at the cathode are unlikely to be mixed with each other.
In an 11th aspect of the present disclosure, for example, in the water electrolysis cell according to the 9th aspect, the electrolyte membrane may include a cation exchange membrane. According to the 11th aspect, the oxygen gas generated at the anode and the hydrogen gas generated at the cathode are unlikely to be mixed with each other.
The water electrolysis cell according to a 12th aspect of the present disclosure includes:

a diaphragm separating a first space and a second space;
an anode provided in the first space; and
a cathode provided in the second space,
wherein at least one selected from the group consisting of the anode and the cathode includes the electrode catalyst according to the 8th aspect.

According to the 12th aspect, the water electrolysis cell is likely to have a low overvoltage.
The water electrolyzer according to a 13th aspect of the present disclosure includes:

the water electrolysis cell according to any one of the 9th to 12th aspects; and
a voltage applicator that is connected to the anode and the cathode and that applies a voltage between the anode and the cathode.

According to the 13th aspect, the water electrolyzer is likely to have a low overvoltage.
Hereinafter, embodiments of the present disclosure will be described with reference to the drawings. The present disclosure is not limited to the following embodiments.
Incidentally, all of the embodiments described below show comprehensive and specific examples. Accordingly, the numerical values, shapes, materials, components, etc. shown in the following embodiments are examples and are not intended to limit the present disclosure. Among the components in the following embodiments, components that are not described in independent claims showing the highest-order concept are described as optional components. In addition, the drawings schematically show the respective components for the sake of easy understanding and may not accurately display the shape, dimensional ratio, etc.

(First embodiment)

Fig. 1 is a diagram schematically illustrating an electrode catalyst ink according to the present embodiment. The electrode catalyst ink 1 includes a catalyst 10 including a layered double hydroxide (LDH), an organic polymer 11, and a solvent 12. The Hansen solubility parameter distance $R_{a1}$ between the solvent 12 and the catalyst 10 is 15.0 $MPa^{1/2}$ or more and less than 20.5 $MPa^{1/2}$. The Hansen solubility parameter distance $R_{a2}$ between the solvent 12 and the organic polymer 11 is 10.0 $MPa^{1/2}$ or more and 14.0 $MPa^{1/2}$ or less. According to such configuration, an electrode catalyst ink 1 having excellent dispersibility can be provided.
The Hansen solubility parameter (HSP) is a parameter indicating the dissolution properties between materials. In the present specification, the HSP means a parameter of a vector quantity obtained by decomposing the Hildebrand solubility parameter into three cohesive energy components: London dispersion force, dipolar force, and hydrogen bonding force. In the present specification, a component corresponding to the London dispersion force of the HSP is mentioned as dispersion term $\delta d$, the component corresponding to the dipolar force of the HSP is mentioned as polarity term $\delta p$, and the component corresponding to the hydrogen bonding force of the HSP is mentioned as hydrogen bond term $\delta h$. The unit of each parameter is $MPa^{1/2}$.
Since the HSP is a vector quantity, for example, in pure materials, almost no materials have the same HSP value. In materials generally used, HSP database thereof have been constructed. The HSP value of a specific material can be acquired by referring to this database. On the other hand, when the HSP value of a material is not registered in any database, the HSP value can be calculated from the chemical structure of the material by using computer software, such as Hansen Solubility Parameters in Practice (HSPiP). In addition, the HSP value of a mixture including a plurality of materials can be calculated as the sum of the values obtained by multiplying the HSP value of each material by the volume ratio of each material to the total mixture. For example, the HSP value of a mixed solvent $S_m$ consisting of a solvent $S_a$ and a solvent $S_b$ when the volume ratio of these solvents in the mixed solvent, (volume of solvent $S_a$) : (volume of solvent $S_b$, is x : y is represented by the following equation (2):
[Math. 2]

$$[\delta d_m, \delta p_m, \delta h_m] = \frac{[x \cdot \delta d_a + y \cdot \delta d_b,\ x \cdot \delta p_a + y \cdot \delta p_b,\ x \cdot \delta h_a + y \cdot \delta h_b]}{x + y} \quad \text{Equation (2).}$$

In the equation (2), $\delta d_m$ is the dispersion term of the HSP of the mixed solvent $S_m$, $\delta p_m$ is the polarity term of the HSP of the mixed solvent $S_m$, $\delta h_m$ is the hydrogen bond term of the HSP of the mixed solvent $S_m$, $\delta d_a$ is the dispersion term of the HSP of the solvent $S_a$, $\delta p_a$ is the polarity term of the HSP of the solvent $S_a$, $\delta h_a$ is the hydrogen bond term of the HSP of the solvent $S_a$, $\delta d_b$ is the dispersion term of the HSP of the solvent $S_b$, $\delta p_b$ is the polarity term of the HSP

of the solvent $S_b$, and $\delta h_b$ is the hydrogen bond term of the HSP of the solvent $S_b$.

Fig. 2 is a diagram illustrating the concepts of the HSP value of a catalyst 10, the HSP value of an organic polymer 11, the HSP value of a solvent 12, an HSP distance $R_{a1}$, and an HSP distance $R_{a2}$ in an HSP space. The HSP distance $R_{a1}$ means the HSP distance between the catalyst 10 and the solvent 12 in an HSP space. The HSP distance $R_{a2}$ means the HSP distance between the organic polymer 11 and the solvent 12 in an HSP space.

As described above, in the electrode catalyst ink 1, the HSP distance $R_{a1}$ is 15.0 $MPa^{1/2}$ or more and less than 20.5 $MPa^{1/2}$, and the HSP distance $R_{a2}$ is 10.0 $MPa^{1/2}$ or more and 14.0 $MPa^{1/2}$ or less. Consequently, the relationship between the affinity between the solvent 12 and the catalyst 10 and the affinity between the solvent 12 and the organic polymer 11 is likely to be adjusted to a desired state. As a result, the organic polymer 11 is unlikely to aggregate, and the organic polymer 11 is likely to be present on the surface of the catalyst 10 by adsorption between the catalyst 10 and the organic polymer 11. In addition, in the electrode catalyst ink 1, the affinity between the catalyst 10 and the solvent 12 is kept good, and the catalyst 10 is likely to be well dispersed in the electrode catalyst ink 1. Furthermore, in the electrode catalyst ink 1, the organic polymer 11 is unlikely to separate from the surface of the catalyst 10. As a result, in the electrode catalyst ink 1, aggregation of the catalyst 10 or the organic polymer 11 can be prevented. That is, in the electrode catalyst ink 1, the catalyst 10 and the organic polymer 11 are likely to have excellent dispersibility. The HSP distance $R_{a1}$ and the HSP distance $R_{a2}$ are represented respectively by the following equations (3) and (4):

$$R_{a1}^2 = 4 \times (\delta d_c - \delta d_p)^2 + (\delta p_c - \delta p_p)^2 + (\delta h_c - \delta h_p)^2 \quad \text{Equation (3),}$$

$$R_{a2}^2 = 4 \times (\delta d_i - \delta d_p)^2 + (\delta p_i - \delta p_p)^2 + (\delta h_i - \delta h_p)^2 \quad \text{Equation (4).}$$

In the equation (3), $\delta d_c$ is the dispersion term of the HSP of the catalyst 10, $\delta p_c$ is the polarity term of the HSP of the catalyst 10, and $\delta h_c$ is the hydrogen bond term of the HSP of the catalyst 10. In the equation (4), δd; is the dispersion term of the HSP of the organic polymer 11, $\delta p_i$ is the polarity term of the HSP of the organic polymer 11, and $\delta h_i$ is the hydrogen bond term of the HSP of the organic polymer 11. In the equations (3) and (4), $\delta d_p$ is the dispersion term of the HSP of the solvent 12, $\delta p_p$ is the polarity term of the HSP of the solvent 12, and $\delta h_p$ is the hydrogen bond term of the HSP of the solvent 12.

In the electrode catalyst ink 1, the HSP distance $R_{a1}$ may be 17.0 $MPa^{1/2}$ or more and 20.3 $MPa^{1/2}$ or less. In the electrode catalyst ink 1, the HSP distance $R_{a2}$ may be 10.2 $MPa^{1/2}$ or more and 13.7 $MPa^{1/2}$ or less. Consequently, in the electrode catalyst ink 1, the catalyst 10 and the organic polymer 11 are likely to more certainly have excellent dispersibility.

[Organic polymer]

As described above, the electrode catalyst ink 1 includes an organic polymer 11. The organic polymer 11 disperses, for example, the catalyst 10. The organic polymer 11 can be an organic material that can be present on the surface of the catalyst 10. The organic polymer 11 is present on, for example, at least a part of the surface of the catalyst 10. The organic polymer 11 may be present between particles of the catalyst 10. The organic polymer 11 may be in contact with the catalyst 10. The organic polymer 11 may cover at least a part of the surface of the catalyst 10. When the electrode catalyst ink 1 includes the organic polymer 11, aggregation of particles of the catalyst 10 can be prevented by the steric hindrance caused by the organic polymer 11. Consequently, in the electrode catalyst ink 1, the catalyst 10 and the organic polymer 11 are likely to have excellent dispersibility. In addition, when an electrode catalyst is formed on a base material, such as a substrate, the bondability between the base material and the electrode catalyst can be improved by that the electrode catalyst ink 1 includes the organic polymer 11. Consequently, an electrode catalyst having excellent durability can be provided.

In the electrode catalyst ink 1, the catalyst 10 and the organic polymer 11 form, for example, a complex, and this complex is provided as a catalyst material. In the catalyst ink 1, this catalyst material has, for example, a predetermined particle diameter. Consequently, in the electrode catalyst ink 1, the catalyst material is likely to more certainly have excellent dispersibility. In the electrode catalyst ink 1, the particle diameter of the catalyst material is not limited to a specific value and may be 1.5 μm or less, 1.2 μm or less, or 1.0 μm or less. The particle diameter of the catalyst material is the particle diameter (D95) corresponding to a cumulative volume of 95% determined, for example, from a particle size distribution measured on a volume basis for the electrode catalyst ink 1 by a dynamic light scattering method using a particle size distribution analyzer.

The organic polymer 11 is, for example, an organic polymer having ion conductivity. The organic polymer 11 may have cation conductivity or may have anion conductivity. The cation conductivity is, for example, proton conductivity.

When the organic polymer 11 has ion conductivity, the electrode catalyst obtained by dying the electrode catalyst ink 1 is likely to more certainly have an excellent catalyst activity.

The organic polymer 11 may be an organic polymer not having ion conductivity. That is, the organic polymer 11 may be a neutral organic polymer. The term "neutral" means that the organic polymer 11 does not include an anion exchange group and a cation exchange group. Even in this case, aggregation of particles of the catalyst 10 can be prevented by the steric hindrance caused by the organic polymer 11. Consequently, in the electrode catalyst ink 1, the catalyst 10 and the organic polymer 11 are likely to more certainly have excellent dispersibility. An example of the organic polymer not having ion conductivity is polytetrafluoroethylene (PTFE).

The organic polymer 11 is not limited to a specific organic material. The organic polymer 11 may be an organic polymer including fluorine. The organic polymer 11 may be an ion exchange resin including fluorine. The organic polymer 11 may be an organic polymer having fluorine and a sulfonate ion group. The organic polymer 11 may include a perfluorocarbon polymer having a sulfonate ion group. When the organic polymer 11 includes fluorine, the thermal stability and electrochemical stability of the organic polymer 11 can be improved. Furthermore, when the organic polymer 11 includes fluorine, the alkali resistance of the electrode catalyst can be more certainly improved. The perfluorocarbon polymer having a sulfonate ion group is, for example, Nafion (registered trademark). Nafion is, for example, an organic polymer having proton conductivity. Nafion has the following chemical formula:

[Chem. 1]

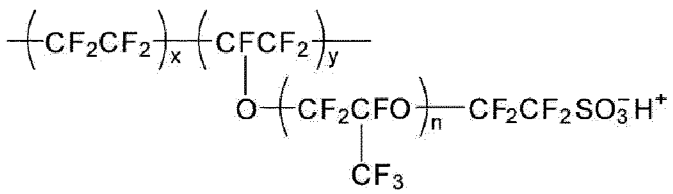

In the above chemical formula, y/x satisfies $1 \le y/x \le 9$, and n is an integer of 0 or more and 2 or less.

The HSP value of the organic polymer 11 can be determined by, for example, referring to a database or calculating using computer software such as HSPiP. When the organic polymer 11 has an amphiphilic structure including a hydrophobic part and a hydrophilic part, the HSP value of the organic polymer 11 can be determined by the above-mentioned method for each of the hydrophobic part and the hydrophilic part. When the solvent 12 included in the electrode catalyst ink 1 is a hydrophobic solvent, the HSP value of the hydrophobic part of the organic polymer 11 may be used. When the solvent 12 included in the electrode catalyst ink 1 is a hydrophilic solvent, the HSP value of the hydrophilic part of the organic polymer 11 may be used.

For example, the dispersion term of the HSP in the hydrophilic part of Nafion is 15.2 $MPa^{1/2}$. The polarity term of the HSP in the hydrophilic part of Nafion is 9.3 $MPa^{1/2}$. The hydrogen bond term of the HSP in the hydrophilic part of Nafion is 19.6 $MPa^{1/2}$. In addition, for example, the dispersion term of the HSP in the hydrophobic part of Nafion is 15.5 $MPa^{1/2}$. The polarity term of the HSP in the hydrophobic part of Nafion is 16.0 $MPa^{1/2}$. The hydrogen bond term of the HSP in the hydrophobic part of Nafion is 42.3 $MPa^{1/2}$.

The equivalent mass (EW) of the organic polymer 11 is not limited to a specific value. The term "equivalent mass" means the mass of the organic polymer 11 per one mole of an anionic functional group, such as a sulfonate ion group. The equivalent mass of the organic polymer 11 may be 1100 g/mol or less or may be 900 g/mol or less. Consequently, aggregation of the catalyst 10 can be more certainly prevented. As a result, in the electrode catalyst ink 1, the catalyst 10 and the organic polymer 11 are likely to more certainly have excellent dispersibility. The lower limit of the equivalent mass of the organic polymer 11 is not limited to a specific value and may be 720 g/mol or 980 g/mol.

[Solvent]

The solvent 12 is, for example, a solvent that disperses the catalyst 10 and the organic polymer 11 in the electrode catalyst ink 1. When the electrode catalyst ink 1 is prepared by adding an additive solvent to a dispersion of the catalyst 10 or the organic polymer 11, the solvent 12 means the mixed solvent of the solvent included in the dispersion and the additive solvent. The solvent 12 may include only one kind of solvent or may include two or more kinds of solvents. When the solvent 12 includes a plurality of kinds of solvents, the solvents have compatibility with one another. It is desirable that the solvents are sufficiently compatible with one another and are not phase-separated in the solvent 12. The types of the solvents and the mixing ratio of the solvents can be adjusted not to cause phase separation of the solvent 12 at room temperature.

As described above, the solvent 12 may include two solvents. That is, the solvent 12 may include a first solvent and a second solvent. When the solvent 12 includes two solvents, the first solvent and the second solvent are not limited to specific solvents. In the solvent 12, the first solvent and the second solvent are, for example, polar solvents. From the viewpoint of raw material cost, disposal cost, or environmental load, the solvent 12 desirably includes water. When the solvent 12 includes two solvents, in the solvent 12, an example of the first solvent is water. The second solvent is, for example, a solvent having excellent miscibility with the first solvent. An example of the second solvent is an alcohol. The alcohol may be an aliphatic alcohol. Examples of the alcohol are ethanol, 1-propanol, and 2-propanol. As the alcohol, at least one alcohol selected from these alcohols may be used, or a plurality of alcohols may be used. The solvent 12 may include, for example, water and an alcohol. Consequently, the organic polymer 11 is unlikely to aggregate, and the organic polymer 11 is likely to be present on the surface of the catalyst 10 by adsorption between the catalyst 10 and the organic polymer 11. In addition, in the electrode catalyst ink 1, the affinity between the catalyst 10 and the solvent 12 is kept good, and the catalyst 10 is likely to be well dispersed in the electrode catalyst ink 1. Furthermore, in the electrode catalyst ink 1, the organic polymer 11 is unlikely to separate from the surface of the catalyst 10. As a result, in the electrode catalyst ink 1, the catalyst 10 and the organic polymer 11 are likely to more certainly have excellent dispersibility.

The kind of the solvent included in the electrode catalyst ink 1 can be qualitatively and quantitatively determined by, for example, gas chromatography (GC), mass spectrometry (MS), and nuclear magnetic resonance method (NMR). When the solvent included in the electrode catalyst ink 1 is a mixed solvent including a plurality of solvents, the ratio of contents of the solvents included in the mixed solvent can also be determined by the above-described methods.

The first solvent and the second solvent have, for example, excellent miscibility. Consequently, the solvent 12 is unlikely to cause phase separation. For example, when the solvent 12 includes a plurality of solvents and also includes water, in the solvent 12, the HSP distance $R_{a3}$ between water and the solvent $S_n$ other than water is represented by the following equation (5). Here, the dispersion term $\delta d$ of the HSP of water is 15.5 $MPa^{1/2}$. The polarity term $\delta p$ of the HSP of water is 16.0 $MPa^{1/2}$. The hydrogen bond term $\delta h$ of the HSP of water is 42.3 $MPa^{1/2}$.

$$R_{a3}^2 = 4 \times (15.5 - \delta d_n)^2 + (16.0 - \delta p_n)^2 + (42.3 - \delta h_n)^2 \quad \text{Equation (5).}$$

In the equation (5), $\delta d_n$ is the dispersion term of the HSP of the solvent other than water in the solvent 12, $\delta p_n$ is the polarity term of the HSP of the solvent other than water in the solvent 12, and $\delta h_n$ is the hydrogen bond term of the HSP of the solvent other than water in the solvent 12.

The affinity and the miscibility between two materials are likely to have a predetermined correlation with the HSP distance between the two materials. The HSP distance $R_{a3}$ is not limited to a specific value. The HSP distance $R_{a3}$ is, for example, 30 $MPa^{1/2}$ or less. Consequently, in the electrode catalyst ink 1, water and the solvent other than water have excellent miscibility. The HSP distance $R_{a3}$ may be 25 $MPa^{1/2}$ or less or 20 $MPa^{1/2}$ or less. The lower limit of the HSP distance $R_{a3}$ is not limited to a specific value and may be 5 $MPa^{1/2}$ or 10 $MPa^{1/2}$.

When the solvent 12 includes two solvents, the first solvent may be water, and the second solvent may be an alcohol. In this case, the solvent 12 may include the first solvent as the main component or may include the second solvent as the main component. The term "main component" means a component that is included in the largest amount on a volume basis.

When the first solvent is water and the second solvent is an alcohol in the solvent 12, the content of the first solvent and the content of the second solvent in the solvent 12 are not limited to specific values. When the first solvent is water and the second solvent is an alcohol in the solvent 12, the ratio of the volume of water to the volume of the alcohol in the solvent 12 is, for example, 0.80 or more and 1.80 or less. Consequently, in the electrode catalyst ink 1, the catalyst 10 and the organic polymer 11 are likely to more certainly have excellent dispersibility.

As described above, when the first solvent is water and the second solvent is an alcohol, in the solvent 12, the second solvent may include a plurality of alcohols. When the first solvent in the solvent 12 is water and the second solvent includes ethanol as the main component, the ratio of the volume of water to the volume of the alcohol in the solvent 12 may be 0.80 or more and 1.20 or less. When the first solvent in the solvent 12 is water and the second solvent includes 2-propanol as the main component, the ratio of the volume of water to the volume of the alcohol in the solvent 12 may be 1.20 or more and 1.80 or less. When the first solvent in the solvent 12 is water and the second solvent includes 1-propanol as the main component, the ratio of the volume of water to the volume of the alcohol in the solvent 12 may be 0.95 or more and 1.50 or less.

[Catalyst]

The catalyst 10 is a material having activity for a reaction of generating a gas, such as hydrogen and oxygen, at the anode or the cathode of the water electrolysis cell. The catalyst 10 may include a layered double hydroxide (LDH)

as the main component. That is, the catalyst 10 may include the LDH in the largest amount on a mass basis.

The LDH includes, for example, two or more transition metals. The transition metal includes, for example, at least two selected from the group consisting of V, Cr, Mn, Fe, Co, Ni, Cu, W, and Ru.

The LDH has, for example, a composition represented by the following composition formula (6):

$$[M1^{2+}_{1-x}M2^{3+}x(OH)_2][yA^{n-}\cdot mH_2O] \qquad \text{Composition formula (6).}$$

In the composition formula (6), $M1^{2+}$ is a divalent transition metal ion, $M2^{3+}$ is a trivalent transition metal ion, $A^{n-}$ is an interlayer anion, x is a rational number satisfying a condition of $0 < x < 1$, y is a number corresponding to the required amount of charge balance, n is an integer, and m is an appropriate rational number.

The LDH may include, for example, Ni and Fe. For example, in the composition formula (6), M1 may be Ni, and M2 may be Fe. According to such configuration, the electrode catalyst obtained by drying the electrode catalyst ink 1 more certainly has an excellent catalyst activity and is likely to show a high catalyst activity, for example, compared when M1 is Co.

The ratio of the amount of Fe to the total amount of Ni and Fe included in the LDH may be 0.25 or more and 0.5 or less. According to such configuration, the electrode catalyst obtained by drying the electrode catalyst ink 1 is likely to more certainly have an excellent catalyst activity.

The LDH may include a chelating agent. In this case, the chelating agent may be coordinated to the transition metal ion in the LDH. Consequently, the dispersion stability of the LDH can be improved. In addition, since the LDH includes the chelating agent, an LDH having a small particle diameter can be manufactured. As a result, since the surface area of the LDH can be increased, the catalyst activity can be improved. The average particle diameter of the LDH may be 100 nm or less or 50 nm or less. The average particle diameter of the LDH may be 10 nm or less. The lower limit of the average particle diameter of the LDH is not limited to a specific value. The lower limit may be 1.5 nm or 2 nm. The LDH includes primary particles containing one or more tiny single crystal regions and secondary particles formed by aggregation of the primary particles. The average particle diameter of the LDH is the value obtained by dividing the area of a two-dimensional distribution diagram, which shows a relationship between the particle diameter and the distribution of the particle size distribution obtained by a small angle X-ray scattering method (SAXS), by the total number of the particles. The distribution means the numerical value proportional to the total volume occupied by the particle counts of the particle diameter. The area of the two-dimensional distribution diagram is, for example, the product of the particle diameter and the particle count corresponding to the particle diameter.

The chelating agent is not limited to a specific chelating agent. The chelating agent is, for example, an organic compound that coordinates to the transition metal in the LDH. The chelating agent may be at least one of a bidentate organic ligand or a tridentate organic ligand. Examples of the chelating agent are a β-diketone, a β-ketoester, and a hydroxycarboxylic acid. Examples of the β-diketone are acetylacetone (ACAC), trifluoroacetylacetone, hexafluoroacetylacetone, benzoylacetone, thenoyltrifluoroacetone, dipivaloylmethane, dibenzoylmethane, and ascorbic acid. Examples of the β-ketoester are methyl acetoacetate, ethyl acetoacetate, ally acetoacetate, benzyl acetoacetate, n-propyl acetoacetate, iso-propyl acetoacetate, n-butyl acetoacetate, iso-butyl acetoacetate, tert-butyl acetoacetate, 2-methoxyethyl acetoacetate, and methyl 3-oxopentanoate. Examples of the hydroxycarboxylic acid and salts thereof are tartaric acid, citric acid, malic acid, gluconic acid, ferulic acid, lactic acid, glucuronic acid, and salts thereof. The chelating agent may include at least one selected from the group consisting of acetylacetone and trisodium citrate. The chelating agent may be at least one of acetylacetone or trisodium citrate.

$A^{n-}$ is an interlayer ion. $A^{n-}$ is an inorganic ion or an organic ion. Examples of the inorganic ion are $CO_3^{2-}$, $NO_3^-$, $Cl^-$, $SO_4^{2-}$, $Br^-$, $OH^-$, $F^-$, $I^-$, $Si_2O_5^{2-}$, $B_4O_5(OH)_4^{2-}$, and $PO_4^{3-}$. Examples of the organic ion are $CH_3(CH_2)_nSO_4^-$, $CH_3(CH_2)_nCOO^-$, $CH_3(CH_2)_nPO_4^-$, and $CH_3(CH_2)_nNO_3^-$. $A^{n-}$ is an anion that is inserted, together with water molecules, between layers of a metal hydroxide. The charge and the ion size of $A^{n-}$ are not limited to specific levels. The LDH may include one kind of $A^{n-}$ or may include a plurality of kinds of $A^{n-}$.

Fig. 3 is a diagram schematically illustrating an example of the crystal structure of the LDH represented by the composition formula (6). As shown in Fig. 3, LDH20 includes $OH^-$ at each vertex of an octahedron having $M1^{2+}$ or $M2^{3+}$ at the center. The metal hydroxide is represented by $[M1_{1-x}M2_x(OH)_2]^{x+}$. The metal hydroxide has a layered structure in which hydroxide octahedrons share ridges and are two-dimensionally connected to each other. Anions and water molecules are located between the layers of the metal hydroxide. The layers of the metal hydroxide function as host layers 21, and anions and water molecules are inserted therebetween as guest layer 22. That is, as a whole, the LDH20 has a sheet-like structure in which the host layer 21 of the metal hydroxide and the guest layer 22 of anions and water molecules are alternately stacked. The LDH20 has a structure in which $M1^{2+}$ included in the layer of the metal hydroxide is partially substituted with $M2^{3+}$. Accordingly, the surface of the LDH20 is usually positively charged.

The catalyst 10 typically has a particulate shape. The shape of the particle is not limited to a specific shape. Examples of the shape are spherical, elliptical spherical, fibrous, and scaly shapes.

The HSP value of the catalyst 10 can be calculated, for example, as follows. Firstly, at room temperature (25°C),

the catalyst 10 is added to a solvent to prepare a liquid mixture. This liquid mixture is pulverized for 30 minutes with an ultrasonic homogenizer and is then left to stand at 25°C. Regarding the solvent used for preparing the liquid mixture, a plot is produced in an HSP space. The HSP value of the solvent can be determined by, for example, referring to a database or calculating using computer software such as HSPiP. Then, a Hansen sphere is produced in the HSP space so as to enclose only the plot of a solvent that is included in the liquid mixture determined in which the catalyst 10 did not precipitate for 30 minutes or more. The center of this Hansen sphere is defined as the HSP value of the catalyst 10. Incidentally, precipitation of the catalyst 10 in a liquid mixture can be verified by, for example, observing the Tyndall phenomenon by irradiating the liquid mixture with laser light.

The solvent to be used for calculating the HSP value of the catalyst 10 is not limited to a specific type of solvent. The number of the solvents to be used for calculating the HSP value of the catalyst 10 is also not limited to a specific number. For example, when the catalyst 10 includes an LDH, examples of the solvent to be used for calculating the HSP value of the catalyst 10 are water, methanol, ethanol, diethyl ethanol, 1,4-dioxane, dimethoxymethane, ethyl acetate, acetone, acetonitrile, N,N-dimethylformamide, N-methylpyrrolidone, dimethyl sulfoxide, nitromethane, chloroform, chlorobenzene, 1-butanol, cyclohexane, cyclohexanol, dibutyl ether, diacetone alcohol, methyl ethyl ketone, tetrahydrofuran, diethylene glycol, dipropylene glycol, γ-butyrolactone, methyl isobutyl ketone, methylene chloride, n-butyl acetate, N-methylpyrrolidone, propylene glycol monomethyl ether, propylene glycol monomethyl ether acetate, tetrachloroethylene, toluene, and hexane. As the solvent to be used for calculating the HSP value of the catalyst 10, at least one selected from the group consisting of these solvents may be used, or a plurality of solvents may be used. For example, when the catalyst 10 includes an LDH, in calculation of the HSP value of the catalyst 10, for example, water, methanol, ethanol, diethyl ethanol, 1,4-dioxane, dimethoxymethane, ethyl acetate, acetone, acetonitrile, N,N-dimethylformamide, N-methylpyrrolidone, dimethyl sulfoxide, nitromethane, chloroform, chlorobenzene, and hexane can be used.

[Carrier]

The electrode catalyst may further include a carrier. The carrier supports, for example, a catalyst. According to such configuration, since the carrier can stably dispose the catalyst on the surface thereof, the catalyst activity of the electrode catalyst is likely to be kept high.

Fig. 4 is a diagram schematically illustrating another example of the electrode catalyst ink according to the present embodiment. The electrode catalyst ink 2 includes a catalyst 10, an organic polymer 11, a solvent 12, and a carrier 13. Even in such configuration, in the electrode catalyst ink 2, the catalyst 10, the organic polymer 11, and the carrier 13 are likely to more certainly have excellent dispersibility.

In the electrode catalyst ink 2, the organic polymer 11 is present on, for example, at least a part of the surface of the catalyst 10. The organic polymer 11 may be present between particles of the catalyst 10. The organic polymer 11 may be present on the surface of the carrier 13. The organic polymer 11 may be present between particles of the carrier 13. The organic polymer 11 may be present between the carrier 13 and the catalyst 10. When the electrode catalyst ink 2 includes the organic polymer 11, aggregation of the catalyst 10 and the carrier 13 can be prevented by the steric hindrance caused by the organic polymer 11. Consequently, in the electrode catalyst ink 2, the catalyst 10, the organic polymer 11, and the carrier 13 are likely to more certainly have excellent dispersibility. In addition, when an electrode catalyst is formed on a base material, such as a substrate, the bondability between the base material and the electrode catalyst can be improved by that the electrode catalyst ink 2 includes the organic polymer 11. Consequently, an electrode catalyst having excellent durability can be provided.

In the electrode catalyst ink 2, the catalyst 10 may cover the surface of the carrier 13. The catalyst 10 is, for example, in contact with the surface of the carrier 13. The catalyst 10 may cover the entire surface of the carrier 13. The catalyst 10 may only partially cover the surface of the carrier 13. The carrier 13 may have a cross-section whose surface is covered by the catalyst 10. A covering layer including the catalyst 10 may be formed on the surface of the carrier 13. The covering layer may include the catalyst 10 as the main component.

In the electrode catalyst ink 2, the catalyst 10, the organic polymer 11, and the carrier 13 form, for example, a complex, and this complex can be provided as a catalyst material. In the electrode catalyst ink 2, this catalyst material has, for example, a predetermined particle diameter. Consequently, in the electrode catalyst ink 2, the catalyst material is likely to more certainly have excellent dispersibility. In the electrode catalyst ink 2, the particle diameter of the catalyst material is not limited to a specific value and may be, for example, 1.5 μm or less, 1.2 μm or less, or 1.0 μm or less. The particle diameter of the catalyst material is, for example, the particle diameter (D95) corresponding to a cumulative volume of 95% determined from a particle size distribution measured on a volume basis for the electrode catalyst ink 2 by a dynamic light scattering method using a particle size distribution analyzer.

The carrier 13 typically has electrical conductivity. The carrier 13 is not limited to a specific material. Examples of the material of the carrier 13 are transition metals and carbon materials. Examples of the transition metal are V, Cr, Mn, Fe, Co, Ni, Cu, W, and Ru. Examples of the carbon material are acetylene black and Ketjen black (KB). Consequently, the electrode catalyst is likely to more certainly have an excellent catalyst activity. The carrier 13 may include a single

material selected from these materials. or may include a plurality of materials. When the carrier 13 includes a plurality of transition metals, the carrier 13 may be made of an alloy.

The carrier 13 may include, for example, a porous material, such as foam.

The shape of the carrier 13 is not limited to a specific shape. The carrier 13 is, for example, in a particulate shape. The shape of the particle is not limited to a specific shape. Examples of the shape are spherical, elliptical spherical, fibrous, and scaly shapes.

The size of the carrier 13 is not limited to a specific value. For example, when the shape of the carrier 13 is spherical, the average particle diameter of the carrier 13 is not limited to a specific value. The average particle diameter of the carrier 13 may be 100 nm or less or 50 nm or less. The lower limit of the average particle diameter of the carrier 13 may be 10 nm or 20 nm. Consequently, the carrier 13 is likely to support a sufficient amount of the LDH. Furthermore, according to such configuration, the electrode catalyst obtained by drying the electrode catalyst ink 2 can more certainly have, for example, excellent durability in the anode reaction of the water electrolysis. The average particle diameter of the carrier 13 can be determined by, for example, observing the carrier 13 using a transmission electron microscope (TEM). Specifically, the average particle diameter can be determined as the arithmetical mean of particle diameters of arbitrary 50 particles of the carrier 13, which is recognized as observation of the whole of the carrier 13, where the particle diameters are respectively the average values of the maximum diameter and the minimum diameter of each particle of the carrier 13.

Even when the electrode catalyst ink 2 includes the carrier 13 supporting the catalyst 10, the HSP value of a composite material of the catalyst 10 and the carrier 13 can be determined by, for example, the above-described method. In addition, the HSP value obtained by the above-described method is defined as the HSP value of the catalyst.

[Electrode catalyst]

The electrode catalyst according to the present embodiment includes a solidified product of the electrode catalyst ink 1 or 2. That is, the electrode catalyst according to the present embodiment is obtained by drying the electrode catalyst ink 1 or 2. Consequently, the electrode catalyst is likely to have a low overvoltage.

The electrode catalyst according to the present embodiment is used in, for example, a proton exchange membrane type water electrolyzer, an anion exchange membrane type water electrolyzer, or an alkaline diaphragm type water electrolyzer. The electrode catalyst can be used in at least one of the anode or the cathode of the water electrolyzer above.

(Second embodiment)

Fig. 5 is a cross-sectional view schematically illustrating an example of a water electrolysis cell according to the present embodiment.

The water electrolysis cell 3 includes an electrolyte membrane 31, an anode 100, and a cathode 200. The electrolyte membrane 31 is disposed, for example, between the anode 100 and the cathode 200. At least one of the anode 100 or the cathode 200 includes the electrode catalyst described in the first embodiment.

The electrolyte membrane 31 may be an electrolyte membrane having ion conductivity. The electrolyte membrane 31 is not limited to a specific type. The electrolyte membrane 31 may include an anion exchange membrane. The electrolyte membrane 31 may be an anion exchange membrane. The electrolyte membrane 31 is configured such that the oxygen gas generated at the anode 100 and the hydrogen gas generated at the cathode 200 are unlikely to be mixed with each other.

The anode 100 includes, for example, a catalyst layer 30. The catalyst layer 30 may be disposed on one main surface of the electrolyte membrane 31. The term "main surface" means a surface having the largest area of the electrolyte membrane 31. The electrode catalyst included in the catalyst layer 30 is, for example, the electrode catalyst described in the first embodiment. The anode 100 may be further provided with a gas diffusion layer 33 having porosity and electrical conductivity on the catalyst layer 30.

The cathode 200 includes, for example, a catalyst layer 32. The catalyst layer 32 may be disposed on the other main surface of the electrolyte membrane 31. That is, the catalyst layer 32 may be disposed on the main surface of the electrolyte membrane 31 on the opposite side to the main surface on which the catalyst layer 30 is disposed. The catalyst metal that can be used in the catalyst layer 32 is not limited to a specific type. This electrode catalyst may be platinum or the electrode catalyst described in the first embodiment. The cathode 200 may be further provided with a gas diffusion layer 34 having porosity and electrical conductivity on the catalyst layer 32.

According to the configuration above, since at least one of the anode 100 or the cathode 200 includes the electrode catalyst described in the first embodiment, the water electrolysis cell 3 is likely to have a low overvoltage.

(Third embodiment)

Fig. 6 is a cross-sectional view schematically illustrating an example of a water electrolyzer according to the present embodiment.

The water electrolyzer 4 includes a water electrolysis cell 3 and a voltage applicator 40. Since the water electrolysis cell 3 is the same as the water electrolysis cell 3 of the second embodiment, the description thereof is omitted.

The voltage applicator 40 is connected to the anode 100 and the cathode 200 of the water electrolysis cell 3. The voltage applicator 40 is a device for applying a voltage to the anode 100 and the cathode 200 of the water electrolysis cell 3.

The voltage applicator 40 increases the potential of the anode 100 and decreases the potential of the cathode 200. The voltage applicator 40 is not limited to a specific type as long as it can apply to a voltage between the anode 100 and the cathode 200. The voltage applicator 40 may be a device for adjusting the voltage to be applied between the anode 100 and the cathode 200. Specifically, when the voltage applicator 40 is connected to a DC power supply, such as a battery, a solar battery, or a fuel battery, the voltage applicator 40 includes a DC/DC converter. When the voltage applicator 40 is connected to an AC power supply, such as a commercial power supply, the voltage applicator 40 includes an AC/DC converter. The voltage applicator 40 may be a power type power supply that adjusts the voltage to be applied between the anode 100 and the cathode 200 and the current flowing between the anode 100 and the cathode 200 such that the power to be supplied to the water electrolyzer 4 becomes a predetermined set value.

According to the configuration above, the water electrolyzer 4 is likely to have a low overvoltage.

(Fourth embodiment)

Fig. 7 is a cross-sectional view schematically illustrating an example of a water electrolysis cell according to the present embodiment.

The water electrolysis cell 5 according to the present embodiment is, for example, an alkaline water electrolysis cell 5 using an alkaline aqueous solution. In alkaline water electrolysis, an alkaline aqueous solution is used. Examples of the alkaline aqueous solution are a potassium hydroxide aqueous solution and a sodium hydroxide aqueous solution.

The alkaline water electrolysis cell 5 includes an electrolysis bath 70, a diaphragm 41, an anode 300, and a cathode 400. The electrolysis bath 70 is separated into a first space 50 and a second space 60 by the diaphragm 41 disposed the inside thereof. The anode 300 is provided in the first space 50. The cathode 400 is provided in the second space 60. At least one of the anode 300 or the cathode 400 includes the electrode catalyst described in the first embodiment.

The anode 300 may include the electrode catalyst described in the first embodiment. The anode 300 may include, for example, a catalyst layer, and the catalyst layer may include the electrode catalyst described in the first embodiment.

The cathode 400 may include the electrode catalyst described in the first embodiment. The cathode 400 may include, for example, a catalyst layer, and the catalyst layer may include the electrode catalyst described in the first embodiment.

The diaphragm 41 is, for example, a diaphragm for alkaline water electrolysis.

The anode 300 may be disposed so as to be in contact with the diaphragm 41. Alternatively, there may be a space between the anode 300 and the diaphragm 41. The cathode 400 may be disposed so as to be in contact with the diaphragm 41. Alternatively, there may be a space between the cathode 400 and the diaphragm 41.

The alkaline water electrolysis cell 5 electrolyzes an alkaline aqueous solution to manufacture hydrogen and oxygen. An aqueous solution including a hydroxide of an alkali metal or an alkaline earth metal can be supplied to the first space 50 of the alkaline water electrolysis cell 5. An alkaline aqueous solution can be supplied to the second space 60 of the alkaline water electrolysis cell 5. Hydrogen and oxygen are manufactured by performing electrolysis while discharging an alkaline aqueous solution of a predetermined concentration from the first space 50 and the second space 60.

According to the configuration above, since at least one of the anode 300 or the cathode 400 includes the electrode catalyst described in the first embodiment, the alkaline water electrolysis cell 5 is likely to have a low overvoltage.

(Fifth embodiment)

Fig. 8 is a cross-sectional view schematically illustrating an example of a water electrolyzer according to the present embodiment.

The water electrolyzer 6 according to the present embodiment is, for example, an alkaline water electrolyzer 6 using an alkaline aqueous solution. The alkaline water electrolyzer 6 includes an alkaline water electrolysis cell 5 and a voltage applicator 40. Since the alkaline water electrolysis cell 5 is the same as the alkaline water electrolysis cell 5

of the fourth embodiment, the description thereof is omitted.

The voltage applicator 40 is connected to the anode 300 and the cathode 400 of the alkaline water electrolysis cell 5. The voltage applicator 40 is a device for applying a voltage to the anode 300 and the cathode 400 of the alkaline water electrolysis cell 5.

According to the configuration above, the alkaline water electrolyzer 6 is likely to have a low overvoltage.

## EXAMPLES

The present disclosure will now be described in more detail by examples. Incidentally, the following examples are examples of the present disclosure, and the present disclosure is not limited to the following examples.

(Example 1)

(Production of Ni-Fe LDH catalyst material supported by Ni carrier)

Firstly, as a transition metal, a Ni-Fe LDH which is an LDH including Ni and Fe was produced as follows. A mixed solvent of water and ethanol was prepared. The ethanol used was a special grade reagent manufactured by FUJIFILM Wako Pure Chemical Corporation. The volume ratio of water and ethanol in the mixed solvent, water volume : ethanol volume, was 2:3. Nickel chloride hexahydrate manufactured by FUJIFILM Wako Pure Chemical Corporation and iron chloride hexahydrate manufactured by FUJIFILM Wako Pure Chemical Corporation were dissolved in this mixed solvent. In this mixed solvent, the total concentration of Ni ions and Fe ions was 1.0 mol/L, and the ratio of the amount of Fe ions to the total amount of Ni ions and Fe ions was 0.33. Furthermore, acetylacetone (ACAC) was added to the mixed solvent as a chelating agent in the amount of one third the total amount of Ni ions and Fe ions. The thus obtained solution was stirred for 30 minutes.

Ni particles in the same mass as that of the Ni-Fe LDH that would be generated when all Ni and Fe included in this solution were ideally reacted were then added to this solution as a carrier. The Ni particles were those manufactured by US Research Nanomaterials, Inc. and had a particle diameter of 20 nm. Subsequently, to the solution including the Ni-Fe LDH and Ni particles, propylene oxide (POX) in an amount twice the amount of chloride ions in the solution was added as a pH increasing agent. The thus obtained solution was stirred for 1 minute. On this occasion, since the POX gradually capture hydrogen ions in the solution, the pH of the solution gradually increased. Accordingly, the resulting solution was left to stand for 3 days, and the mixture including the Ni-Fe LDH and the Ni particles as a target sample was collected.

(Calculation of Hansen solubility parameter)

The Ni-Fe LDH catalyst supported on the Ni carrier was added to each solvent shown in Table 1 to prepare liquid mixtures. In the preparation of each liquid mixture, the added amount of the Ni-Fe LDH catalyst supported on the Ni carrier was 3 mg, and the added amount of each solvent added was 10 milliliters (mL). Each liquid mixture was subjected to pulverization with an ultrasonic homogenizer for 30 minutes and was then left to stand to prepare respective samples. Incidentally, the samples were each prepared at room temperature (25°C). In each sample, the ease of precipitation of the Ni-Fe LDH catalyst supported on the Ni carrier was measured. In each sample, a sample of which the catalyst precipitated within 15 minutes when the liquid mixture was left to stand at 25°C was evaluated as "3". A sample of which the catalyst precipitated between 15 and 30 minutes when the liquid mixture was left to stand at 25°C was evaluated as "2". A sample of which the catalyst precipitated within 30 minutes when the liquid mixture was left to stand at 25°C was evaluated as "1". A sample of which the catalyst did not precipitate for 30 minutes or more when the liquid mixture was left to stand at 25°C was evaluated as "0". The results are shown in Table 1. Whether the catalyst in a liquid mixture precipitated or not was determined by a Tyndall phenomenon. Each liquid mixture was left to stand at 25°C, and this liquid mixture was irradiated with laser light of 520 nm. On this occasion, when a Tyndall phenomenon was not visually observed, it was judged that the catalyst precipitated. When a Tyndall phenomenon was visually observed, it was judged that the catalyst did not precipitate.

[Table 1]

| Solvent | Evaluation result |
|---|---|
| Water | 1 |
| Methanol | 0 |
| Ethanol | 1 |

(continued)

| Solvent | Evaluation result |
|---|---|
| Diethyl ether | 1 |
| 1,4-Dioxane | 1 |
| Dimethoxymethane | 3 |
| Ethyl acetate | 3 |
| Acetone | 0 |
| Acetonitrile | 0 |
| N,N-Dimethylformamide | 2 |
| N-Methylpyrrolidone | 2 |
| Dimethyl sulfoxide | 2 |
| Nitromethane | 3 |
| Chloroform | 1 |
| Chlorobenzene | 2 |
| Hexane | 3 |

Subsequently, the HSP values of the solvents used in each sample were plotted in an HSP space. A Hansen sphere was produced in the HSP space using HSPiP so as to enclose only the plot of the solvent used in the sample evaluated as "0" in the method above, and the center of this Hansen sphere was defined as the HSP value of the Ni-Fe LDH catalyst supported on the Ni carrier. As a result, the dispersion term $\delta d$ of the HSP of the Ni-Fe LDH catalyst supported on the Ni carrier was 12.6 $MPa^{1/2}$. The polarity term $\delta p$ of the HSP of the Ni-Fe LDH catalyst supported on the Ni carrier was 14.8 $MPa^{1/2}$. The hydrogen bond term $\delta h$ of the HSP of the Ni-Fe LDH catalyst supported on the Ni carrier was 13.7 $MPa^{1/2}$.

(Preparation of electrode catalyst ink for measurement of particle size distribution)

A mixture including a Ni-Fe LDH and Ni particles and a 5 vol% Nafion dispersion solution (Production No.: 527084) manufactured by Aldrich Chemical Co., Ltd. were added to a sample tube to prepare a solution A. In the preparation of the solution A, the added amount of the mixture including the Ni-Fe LDH and the Ni particles was 3 mg. The added amount of the Nafion dispersion solution was 5.9 microliters ($\mu$L). The volume ratio of water, 1-propanol, and ethanol included in the Nafion dispersion solution, water volume : 1-propanol volume : ethanol volume, was 45 : 48 : 2. An additive solvent (10 mL) was further added to the solution A to prepare a solution B. The additive solvent included pure water and ethanol. The volume ratio of pure water and ethanol in the additive solvent, pure water volume : ethanol volume, was 50 : 50. The ethanol used was a special grade reagent manufactured by FUJIFILM Wako Pure Chemical Corporation. The thus obtained solution B was pulverized with an ultrasonic homogenizer for 30 minutes to prepare an electrode catalyst ink for measurement of particle size distribution according to Example 1. In Example 1, the mixed solvent means the solvent included in the solution B. That is, in Example 1, the mixed solvent includes water, 1-propanol, and ethanol contained in the Nafion dispersion solution and the additive solvent. In Example 1, the additive solvent is pure water and ethanol. In Example 1, the ratio of the volume of water to the volume of alcohol in the mixed solvent was 1.00. In this electrode catalyst ink, a catalyst material including a catalyst containing the Ni-Fe LDH and Ni particles and Nafion were dispersed.

(Example 2)

An electrode catalyst ink for measurement of particle size distribution according to Example 2 was obtained as in the preparation of the electrode catalyst ink for measurement of particle size distribution according to Example 1 except for the followings. The additive solvent included pure water and 2-propanol. The volume ratio of pure water and 2-propanol in the additive solvent, pure water volume : 2-propanol volume, was 60 : 40. 2-Propanol used was a special grade reagent manufactured by FUJIFILM Wako Pure Chemical Corporation.

(Example 3)

An electrode catalyst ink for measurement of particle size distribution according to Example 3 was obtained as in the preparation of the electrode catalyst ink for measurement of particle size distribution according to Example 1 except for the followings. The additive solvent included pure water and 1-propanol. The volume ratio of pure water and 1-propanol in the additive solvent, pure water volume : 1-propanol volume, was 50 : 50. 1-Propanol used was a special grade reagent manufactured by FUJIFII,M Wako Pure Chemical Corporation.

(Comparative Example 1)

An electrode catalyst ink for measurement of particle size distribution according to Comparative Example 1 was obtained as in the preparation of the electrode catalyst ink for measurement of particle size distribution according to Example 1 except for the followings. The volume ratio of pure water and ethanol in the additive solvent, pure water volume : ethanol volume, was 75 : 25.

(Comparative Example 2)

An electrode catalyst ink for measurement of particle size distribution according to Comparative Example 2 was obtained as in the preparation of the electrode catalyst ink for measurement of particle size distribution according to Example 1 except for the followings. The additive solvent included pure water and 2-propanol. The volume ratio of pure water and 2-propanol in the additive solvent, pure water volume : 2-propanol volume, was 75 : 25.

(Comparative Example 3)

An electrode catalyst ink for measurement of particle size distribution according to Comparative Example 3 was obtained as in the preparation of the electrode catalyst ink for measurement of particle size distribution according to Example 1 except for the followings. The additive solvent included pure water and 1-propanol. The volume ratio of pure water and 1-propanol in the additive solvent, pure water volume : 1-propanol volume, was 75 : 25.

(Particle diameter of catalyst material)

The particle diameter D95 of the catalyst material included in each of the electrode catalyst inks for measurement of particle size distribution according to Examples 1 to 3 and Comparative Examples 1 to 3 was measured using a particle size distribution analyzer NanotracWave II manufactured by MicrotracBEL Corporation. The particle diameter D95 is a particle diameter corresponding to a cumulative volume of 95% in a particle size distribution on a volume basis. The results are shown in Table 2.

(Calculation of HSP distances $R_{a1}$ and $R_{a2}$)

In the electrode catalyst inks for measurement of particle size distribution according to Examples 1 to 3 and Comparative Examples 1 to 3, the HSP distance $R_{a1}$ [$MPa^{1/2}$] between the mixed solvent and the Ni-Fe LDH catalyst and the HSP distance $R_{a2}$ [$MPa^{1/2}$] between the mixed solvent and Nafion were determined by the following equations (7) and (8), respectively. In the electrode catalyst inks for measurement of particle size distribution according to Examples 1 to 3 and Comparative Examples 1 to 3, the mixed solvent means the solvents included in the solution B. For example, in Example 1, the mixed solvent includes water, 1-propanol, and ethanol included in the Nafion dispersion solution and the additive solvent. In Example 1, the additive solvent is pure water and ethanol. The dispersion term $\delta d$ of the HSP, the polarity term $\delta p$ of the HSP, and the hydrogen bond term $\delta h$ of the HSP of each solvent included in the mixed solvent were determined by referring to databases. Moreover, the dispersion term $\delta d_p$ of the HSP, the polarity term $\delta p_p$ of the HSP, and the hydrogen bond term $\delta h_p$ of the HSP of the mixed solvent were determined according to an extended equation of the above equation (2) to a three-component system. Incidentally, in the equations (7) and (8), the numerical values represented using $MPa^{1/2}$ were substituted for the dispersion term $\delta d_p$ of the HSP, the polarity term $\delta p_p$ of the HSP, and the hydrogen bond term $\delta h_p$ of the HSP. The results are shown in Table 2.

$$R_{a1}^2 = 4 \times (12.6 - \delta d_p)^2 + (14.8 - \delta p_p)^2 + (13.7 - \delta h_p)^2 \quad \text{Equation (7)}$$

$$R_{a2}^2 = 4 \times (15.2 - \delta d_p)^2 + (9.3 - \delta p_p)^2 + (19.6 - \delta h_p)^2 \quad \text{Equation (8)}$$

[Table 2]

| | Ratio of water volume to alcohol volume in mixed solvent | Particle diameter $D_{95}$ of catalyst material [μm] | $R_{a1}$ [$MPa^{1/2}$] | $R_{a2}$ [$MPa^{1/2}$] |
|---|---|---|---|---|
| Example 1 | 1.00 | 0.4982 | 18.3 | 11.7 |
| Example 2 | 1.50 | 0.5496 | 18.9 | 12.4 |
| Example 3 | 1.00 | 0.9720 | 17.6 | 10.5 |
| Comparative Example 1 | 3.00 | 2.8204 | 23.6 | 17.7 |
| Comparative Example 2 | 3.00 | 3.2179 | 22.6 | 16.6 |
| Comparative Example 3 | 3.00 | 1.7033 | 23.2 | 17.1 |

As shown in Table 2, in Examples 1 to 3, the particle diameter of the catalyst material included in the electrode catalyst ink was 1.0 μm or less. In addition, in the electrode catalyst inks according to Examples 1 to 3, the HSP distance $R_{a1}$ was 15.0 $MPa^{1/2}$ or more and less than 20.5 $MPa^{1/2}$, and the HSP distance $R_{a2}$ was 10.0 $MPa^{1/2}$ or more and 14.0 $MPa^{1/2}$ or less. Consequently, it was suggested that when the HSP distances $R_{a1}$ and $R_{a2}$ are within a predetermined range, the catalyst material included in the electrode catalyst ink has a small particle diameter.

(Example 4)

(Preparation of electrode catalyst ink for evaluation of dispersibility)

A mixture including a Ni-Fe LDH and Ni particles and a 5 vol% Nafion dispersion solution (Production No.: 527084) manufactured by Aldrich Chemical Co., Ltd. were added to a 5-mL screw tube bottle manufactured by Maruemu Corporation to prepare a solution C. In the preparation of this solution C, the added amount of the mixture including the Ni-Fe LDH and Ni particles was 20 mg. The added amount of the Nafion dispersion solution was 39.2 μL. The volume ratio of water, 1-propanol, and ethanol included in the Nafion dispersion solution, water volume : 1-propanol volume : ethanol volume, was 45 : 48 : 2. An additive solvent (1.0 mL) was further added to this solution C to prepare a solution D. The additive solvent included pure water and ethanol. The volume ratio of pure water and ethanol in the additive solvent, pure water volume : ethanol volume, was 55 : 45. The ethanol used was a special grade reagent manufactured by FUJIFII,M Wako Pure Chemical Corporation. The thus obtained solution D was pulverized for 30 minutes using an ultrasonic homogenizer to prepare an electrode catalyst ink for evaluation of dispersibility according to Example 4. In Example 4, the mixed solvent means the solvents included in the solution D. That is, in Example 4, the mixed solvent included water, 1-propanol, and ethanol included in the Nafion dispersion solution and the additive solvent. In Example 4, the additive solvent was pure water and ethanol. In Example 4, the ratio of the volume of water to the volume of alcohol in the mixed solvent was 1.20. In this electrode catalyst ink, the catalyst materials including the catalyst containing the Ni-Fe LDH and Ni particles and Nafion were dispersed.

(Example 5)

An electrode catalyst ink for measurement of particle size distribution according to Example 5 was obtained as in the preparation of the electrode catalyst ink for evaluation of dispersibility according to Example 4 except for the followings. The volume ratio of pure water and ethanol in the additive solvent, pure water volume : ethanol volume, was 50 : 50.

(Example 6)

An electrode catalyst ink for measurement of particle size distribution according to Example 6 was obtained as in the preparation of the electrode catalyst ink for evaluation of dispersibility according to Example 4 except for the followings. The volume ratio of pure water and ethanol in the additive solvent, pure water volume : ethanol volume, was 45 : 55.

(Example 7)

An electrode catalyst ink for evaluation of dispersibility according to Example 7 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 65 : 35.

(Example 8)

An electrode catalyst ink for evaluation of dispersibility according to Example 8 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 60 : 40.

(Example 9)

An electrode catalyst ink for evaluation of dispersibility according to Example 9 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 55 : 45.

(Example 10)

An electrode catalyst ink for evaluation of dispersibility according to Example 10 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 60 : 40.

(Example 11)

An electrode catalyst ink for evaluation of dispersibility according to Example 11 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 55 : 45.

(Example 12)

An electrode catalyst ink for evaluation of dispersibility according to Example 12 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 50 : 50.

(Comparative Example 4)

An electrode catalyst ink for measurement of particle size distribution according to Comparative Example 4 was obtained as in the preparation of the electrode catalyst ink for evaluation of dispersibility according to Example 4 except for the followings. The volume ratio of pure water and ethanol in the additive solvent, pure water volume : ethanol volume, was 75 : 25.

(Comparative Example 5)

An electrode catalyst ink for measurement of particle size distribution according to Comparative Example 5 was obtained as in the preparation of the electrode catalyst ink for evaluation of dispersibility according to Example 4 except for the followings. The volume ratio of pure water and ethanol in the additive solvent, pure water volume : ethanol volume, was 70 : 30.

(Comparative Example 6)

An electrode catalyst ink for measurement of particle size distribution according to Comparative Example 6 was obtained as in the preparation of the electrode catalyst ink for evaluation of dispersibility according to Example 4 except for the followings. The volume ratio of pure water and ethanol in the additive solvent, pure water volume : ethanol volume, was 65 : 35.

(Comparative Example 7)

An electrode catalyst ink for measurement of particle size distribution according to Comparative Example 7 was obtained as in the preparation of the electrode catalyst ink for evaluation of dispersibility according to Example 4 except for the followings. The volume ratio of pure water and ethanol in the additive solvent, pure water volume : ethanol volume, was 40 : 60.

(Comparative Example 8)

An electrode catalyst ink for measurement of particle size distribution according to Comparative Example 8 was obtained as in the preparation of the electrode catalyst ink for evaluation of dispersibility according to Example 4 except for the followings. The volume ratio of pure water and ethanol in the additive solvent, pure water volume : ethanol volume, was 35 : 65.

(Comparative Example 9)

An electrode catalyst ink for measurement of particle size distribution according to Comparative Example 9 was obtained as in the preparation of the electrode catalyst ink for evaluation of dispersibility according to Example 4 except for the followings. The volume ratio of pure water and ethanol in the additive solvent, pure water volume : ethanol volume, was 30 : 70.

(Comparative Example 10)

An electrode catalyst ink for measurement of particle size distribution according to Comparative Example 10 was obtained as in the preparation of the electrode catalyst ink for evaluation of dispersibility according to Example 4 except for the followings. The volume ratio of pure water and ethanol in the additive solvent, pure water volume : ethanol volume, was 25 : 75.

(Comparative Example 11)

An electrode catalyst ink for measurement of particle size distribution according to Comparative Example 11 was obtained as in the preparation of the electrode catalyst ink for evaluation of dispersibility according to Example 4 except for the followings. The volume ratio of pure water and ethanol in the additive solvent, pure water volume : ethanol volume, was 20 : 80.

(Comparative Example 12)

An electrode catalyst ink for evaluation of dispersibility according to Comparative Example 12 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 75 : 25.

(Comparative Example 13)

An electrode catalyst ink for evaluation of dispersibility according to Comparative Example 13 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 70 : 30.

(Comparative Example 14)

An electrode catalyst ink for evaluation of dispersibility according to Comparative Example 14 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 50 : 50.

(Comparative Example 15)

An electrode catalyst ink for evaluation of dispersibility according to Comparative Example 15 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 45 : 55.

(Comparative Example 16)

An electrode catalyst ink for evaluation of dispersibility according to Comparative Example 16 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 40 : 60.

(Comparative Example 17)

An electrode catalyst ink for evaluation of dispersibility according to Comparative Example 17 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 35 : 65.

(Comparative Example 18)

An electrode catalyst ink for evaluation of dispersibility according to Comparative Example 18 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 30 : 70.

(Comparative Example 19)

An electrode catalyst ink for evaluation of dispersibility according to Comparative Example 19 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 25 : 75.

(Comparative Example 20)

An electrode catalyst ink for evaluation of dispersibility according to Comparative Example 20 was obtained as in the preparation of the electrode catalyst ink for evaluation of dispersibility according to Example 4 except for the followings. The additive solvent included pure water and 2-propanol. The volume ratio of pure water and 2-propanol in the additive solvent, pure water volume : 2-propanol volume, was 20 : 80.

(Comparative Example 21)

An electrode catalyst ink for evaluation of dispersibility according to Comparative Example 21 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 75 : 25.

(Comparative Example 22)

An electrode catalyst ink for evaluation of dispersibility according to Comparative Example 22 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 70 : 30.

(Comparative Example 23)

An electrode catalyst ink for evaluation of dispersibility according to Comparative Example 23 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 65 : 35.

(Comparative Example 24)

An electrode catalyst ink for evaluation of dispersibility according to Comparative Example 24 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 45 : 55.

(Comparative Example 25)

An electrode catalyst ink for evaluation of dispersibility according to Comparative Example 25 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 40 : 60.

(Comparative Example 26)

An electrode catalyst ink for evaluation of dispersibility according to Comparative Example 26 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 35 : 65.

(Comparative Example 27)

An electrode catalyst ink for evaluation of dispersibility according to Comparative Example 27 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 30 : 70.

(Comparative Example 28)

An electrode catalyst ink for evaluation of dispersibility according to Comparative Example 28 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 25 : 75.

(Comparative Example 29)

An electrode catalyst ink for evaluation of dispersibility according to Comparative Example 29 was obtained as in the preparation of the electrode catalyst ink for evaluation of dispersibility according to Example 4 except for the followings. The additive solvent included pure water and 1-propanol. The volume ratio of pure water and 1-propanol in the additive solvent, pure water volume : 1-propanol volume, was 20 : 80.

(Evaluation of dispersibility)

The electrode catalyst inks for evaluation of dispersibility according to Examples and Comparative Examples were left to stand, and the dispersibility of the catalyst material particles was evaluated. When the electrode catalyst inks were pulverized with an ultrasonic homogenizer and were then left to stand, a sample of which the catalyst material particles precipitated within 5 minutes was judged as "C". When the electrode catalyst inks were pulverized with an ultrasonic homogenizer and were then left to stand, a sample of which the catalyst material particles precipitated within 10 minutes was judged as "B". When the electrode catalyst inks were pulverized with an ultrasonic homogenizer and were then left to stand, a sample of which the catalyst material particles did not precipitate and were dispersed even after 10 minutes was judged as "A". The results are shown in Table 3.

[Table 3]

| | Ratio of water volume to alcohol volume in mixed solvent | Evaluation of dispersibility | $R_{a1}$ [$MPa^{1/2}$] | $R_{a2}$ [$MPa^{1/2}$] |
|---|---|---|---|---|
| Example 4 | 1.20 | A | 19.2 | 12.7 |
| Example 5 | 0.99 | A | 18.2 | 11.6 |
| Example 6 | 0.81 | A | 17.3 | 10.4 |
| Example 7 | 1.79 | A | 19.9 | 13.6 |
| Example 8 | 1.46 | A | 18.7 | 12.2 |
| Example 9 | 1.20 | A | 17.6 | 10.9 |
| Example 10 | 1.46 | A | 19.5 | 12.8 |
| Example 11 | 1.20 | A | 18.4 | 11.6 |
| Example 12 | 0.99 | A | 17.4 | 10.3 |
| Comparative Example 4 | 2.81 | B | 23.3 | 17.3 |
| Comparative Example 5 | 2.22 | B | 22.3 | 16.2 |
| Comparative Example 6 | 1.79 | B | 21.2 | 15.0 |
| Comparative Example 7 | 0.67 | B | 16.3 | 9.3 |
| Comparative Example 8 | 0.54 | B | 15.4 | 8.1 |
| Comparative Example 9 | 0.44 | C | 14.6 | 7.0 |
| Comparative Example 10 | 0.34 | C | 13.7 | 5.9 |
| Comparative Example 11 | 0.26 | C | 12.9 | 4.7 |
| Comparative Example 12 | 2.81 | C | 22.3 | 16.3 |
| Comparative Example 13 | 2.22 | C | 21.1 | 15.0 |
| Comparative Example 14 | 0.99 | B | 16.5 | 9.5 |
| Comparative Example 15 | 0.81 | B | 15.4 | 8.2 |

(continued)

| | Ratio of water volume to alcohol volume in mixed solvent | Evaluation of dispersibility | $R_{a1}$ [$MPa^{1/2}$] | $R_{a2}$ [$MPa^{1/2}$] |
|---|---|---|---|---|
| Comparative Example 16 | 0.67 | B | 14.3 | 6.8 |
| Comparative Example 17 | 0.54 | B | 13.3 | 5.5 |
| Comparative Example 18 | 0.44 | C | 12.4 | 4.1 |
| Comparative Example 19 | 0.34 | C | 11.6 | 2.8 |
| Comparative Example 20 | 0.26 | C | 10.9 | 1.6 |
| Comparative Example 21 | 2.81 | B | 22.7 | 16.6 |
| Comparative Example 22 | 2.22 | B | 21.6 | 15.4 |
| Comparative Example 23 | 1.79 | B | 20.5 | 14.1 |
| Comparative Example 24 | 0.81 | C | 16.4 | 9.1 |
| Comparative Example 25 | 0.67 | C | 15.5 | 7.8 |
| Comparative Example 26 | 0.54 | C | 14.6 | 6.6 |
| Comparative Example 27 | 0.44 | C | 13.8 | 5.4 |
| Comparative Example 28 | 0.34 | C | 13.1 | 4.2 |
| Comparative Example 29 | 0.26 | C | 12.4 | 3.2 |

Fig. 9 is a photograph showing the state of the electrode catalyst ink for evaluation of dispersibility according to Example 4 when pulverized using an ultrasonic homogenizer and then left to stand for 10 minutes. Fig. 10 is a photograph showing the state of the electrode catalyst ink for evaluation of dispersibility according to Comparative Example 10 when pulverized using an ultrasonic homogenizer and then left to stand for 10 minutes. As shown in Fig. 9, in the electrode catalyst ink for evaluation of dispersibility according to Example 4, the catalyst material particles included in the electrode catalyst ink had excellent dispersibility. In contrast, as shown in Fig. 10, in the electrode catalyst ink for evaluation of dispersibility according to Comparative Example 10, the catalyst material particles included in the electrode catalyst ink easily precipitated.

Fig. 11 is a graph showing a relationship between HSP distance $R_{a1}$ and HSP distance $R_{a2}$ in electrode catalyst inks according to Examples and Comparative Examples. The horizontal axis shows the HSP distance $R_{a1}$, and the vertical axis shows the HSP distance $R_{a2}$. In Fig. 11, the broken lines parallel to the vertical axis show a straight line satisfying $R_{a1}$ = 15.0 and a straight line satisfying $R_{a1}$ = 20.5. In Fig. 11, straight lines parallel to the horizontal axis are a straight line satisfying $R_{a2}$ = 10.0 and a straight line satisfying $R_{a2}$ = 14.0. As shown in Fig. 11, in the electrode catalyst inks according to Examples 4 to 12, the HSP distance $R_{a1}$ was 15.0 $MPa^{1/2}$ or more and less than 20.5 $MPa^{1/2}$, and the HSP distance $R_{a2}$ was 10.0 $MPa^{1/2}$ or more and 14.0 $MPa^{1/2}$ or less.

Industrial Applicability

The electrode catalyst ink according to the present disclosure can be used in a water electrolyzer.

Reference Signs List

1, 2 electrode catalyst ink
3 water electrolysis cell
4 water electrolyzer
5 alkaline water electrolysis cell
6 alkaline water electrolyzer
10 catalyst
11 organic polymer
12 solvent
13 carrier
20 LDH
21 host layer
22 guest layer
30, 32 catalyst layer
31 electrolyte membrane
33, 34 gas diffusion layer
40 voltage applicator
41 diaphragm
50 first space
60 second space
70 electrolysis bath
100, 300 anode
200, 400 cathode

**Claims**

1. An electrode catalyst ink for a water electrolysis cell, the electrode catalyst ink including:

   a catalyst including a layered double hydroxide;
   an organic polymer; and
   a solvent, wherein
   a Hansen solubility parameter distance $R_{a1}$ between the solvent and the catalyst is 15.0 $MPa^{1/2}$ or more and less than 20.5 $MPa^{1/2}$; and
   a Hansen solubility parameter distance $R_{a2}$ between the solvent and the organic polymer is 10.0 $MPa^{1/2}$ or more and 14.0 $MPa^{1/2}$ or less.

2. The electrode catalyst ink for the water electrolysis cell according to claim 1, wherein the layered double hydroxide includes Ni and Fe.

3. The electrode catalyst ink for the water electrolysis cell according to claim 1 or 2, the electrode catalyst ink further including:

   a carrier supporting the catalyst, wherein
   the carrier includes a transition metal.

4. The electrode catalyst ink for the water electrolysis cell according to claim 3, wherein the transition metal includes Ni.

5. The electrode catalyst ink for the water electrolysis cell according to any one of claims 1 to 4, wherein the organic polymer includes a perfluorocarbon polymer having a sulfonate ion group.

**6.** The electrode catalyst ink for the water electrolysis cell according to any one of claims 1 to 5, wherein the solvent includes water and an alcohol.

**7.** The electrode catalyst ink for the water electrolysis cell according to claim 6, wherein a ratio of a volume of the water to a volume of the alcohol in the solvent is 0.80 or more and 1.80 or less.

**8.** An electrode catalyst comprising: a solidified product of the electrode catalyst ink for the water electrolysis cell according to any one of claims 1 to 7.

**9.** A water electrolysis cell comprising:

an anode;
a cathode; and
an electrolyte membrane disposed between the anode and the cathode, wherein
at least one selected from the group consisting of the anode and the cathode includes the electrode catalyst according to claim 8.

**10.** The water electrolysis cell according to claim 9, wherein the electrolyte membrane includes an anion exchange membrane.

**11.** The water electrolysis cell according to claim 9, wherein the electrolyte membrane includes a cation exchange membrane.

**12.** A water electrolysis cell comprising:

a diaphragm separating a first space and a second space;
an anode provided in the first space; and
a cathode provided in the second space, wherein
at least one selected from the group consisting of the anode and the cathode includes the electrode catalyst according to claim 8.

**13.** A water electrolyzer comprising:

the water electrolysis cell according to any one of claims 9 to 12; and
a voltage applicator that is connected to the anode and the cathode and that applies a voltage between the anode and the cathode.

FIG. 1

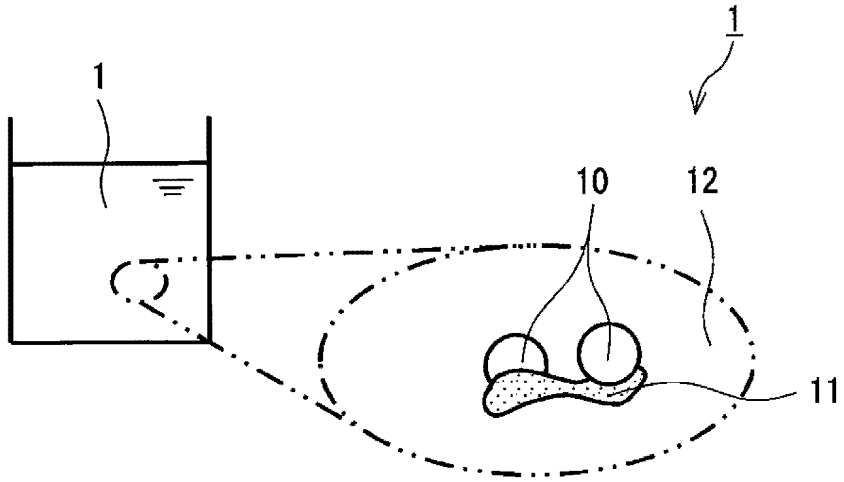
1
1
10
12
11

FIG. 2

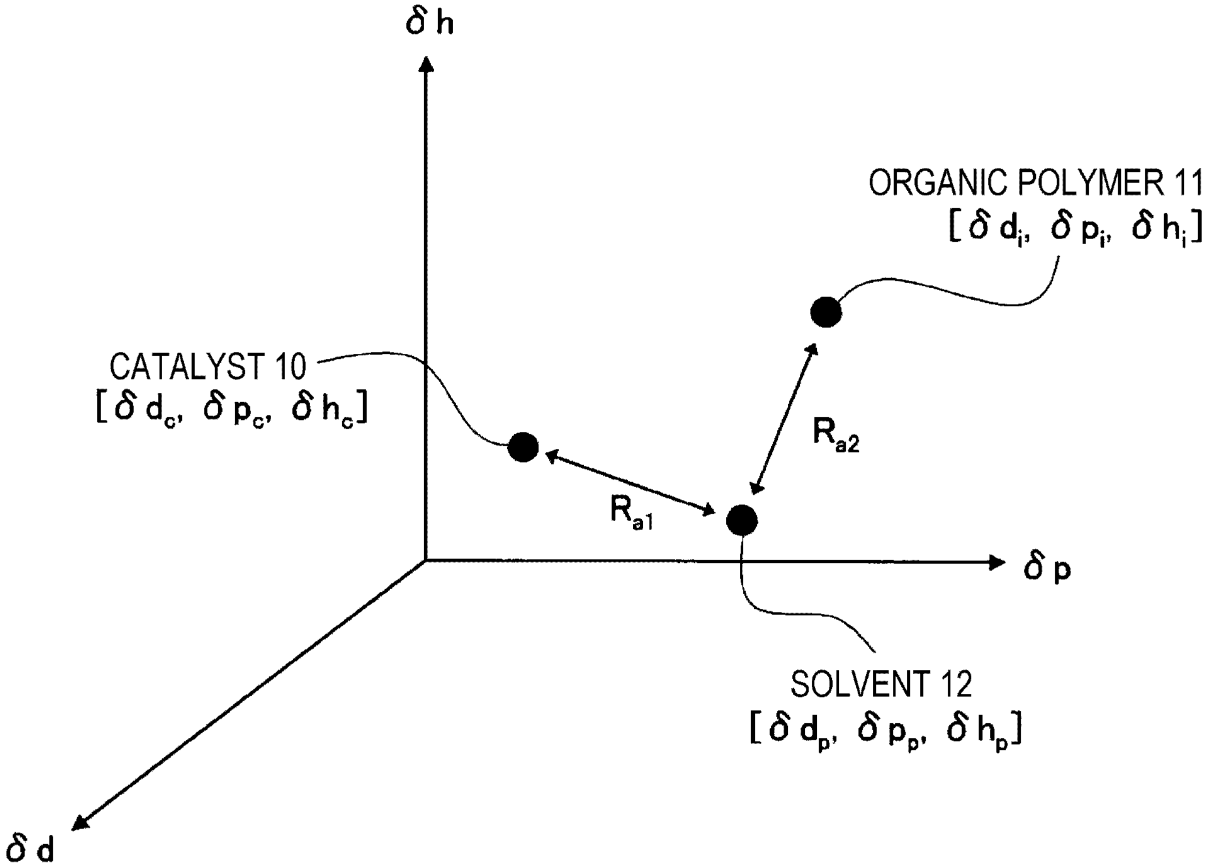
δh
ORGANIC POLYMER 11
[δdi, δpi, δhi]
CATALYST 10
[δdc, δpc, δhc]
Ra2
Ra1
δp
SOLVENT 12
[δdp, δpp, δhp]
δd

FIG. 3

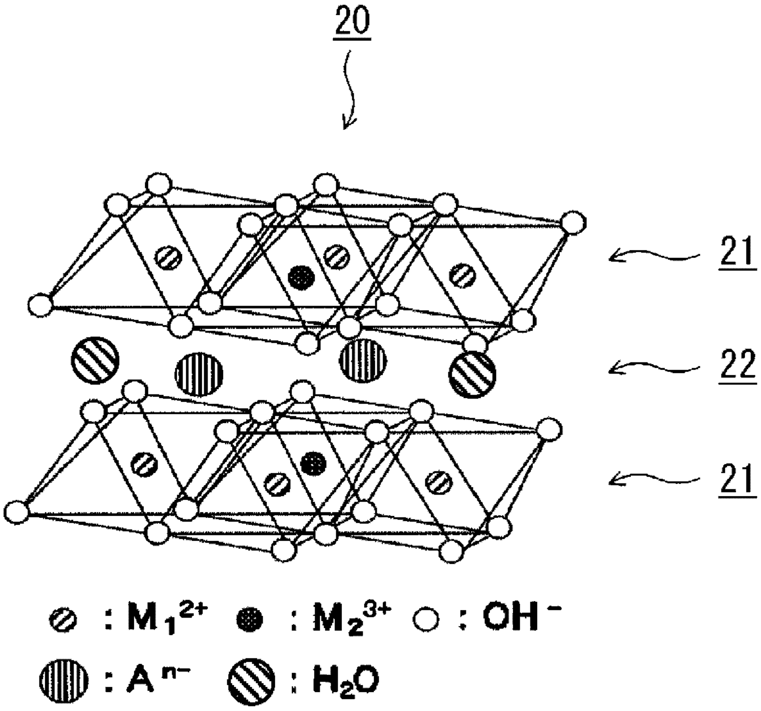


FIG. 4

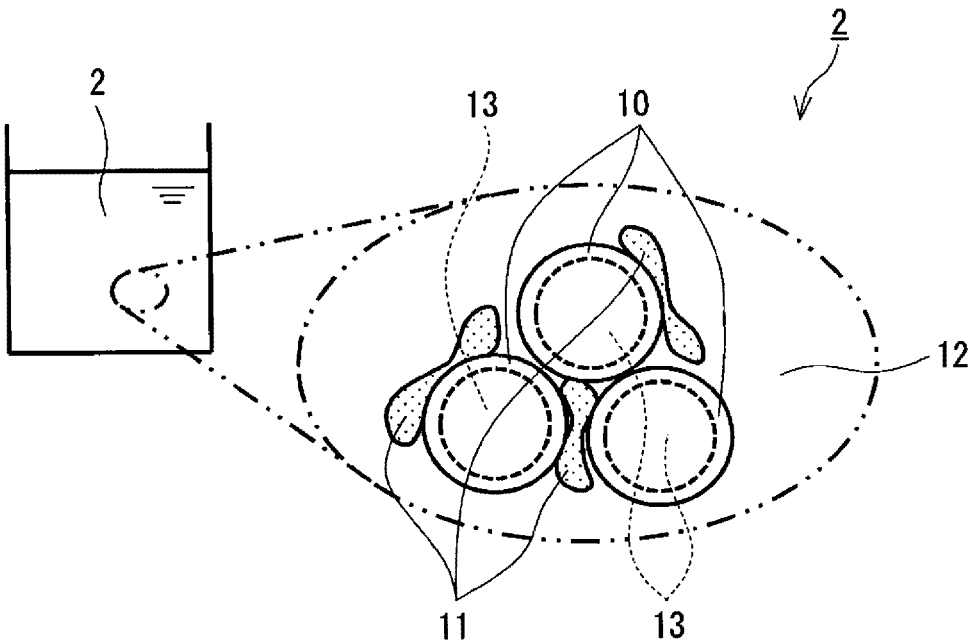

FIG. 5

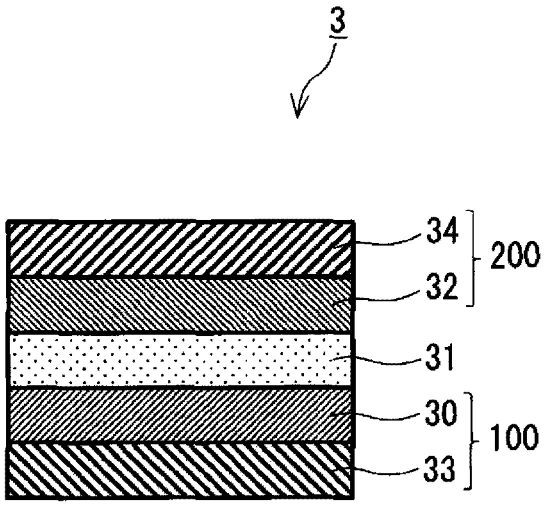


FIG. 6

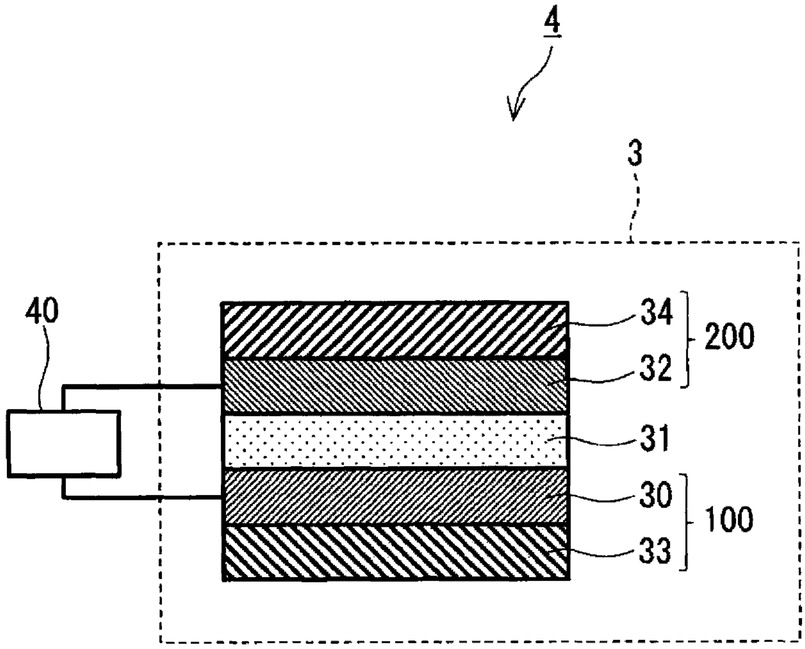

# FIG. 7

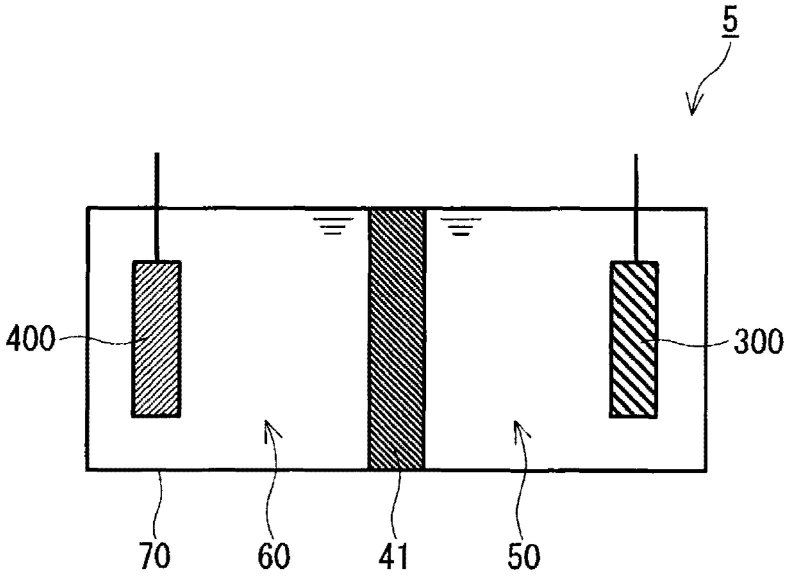


# FIG. 8

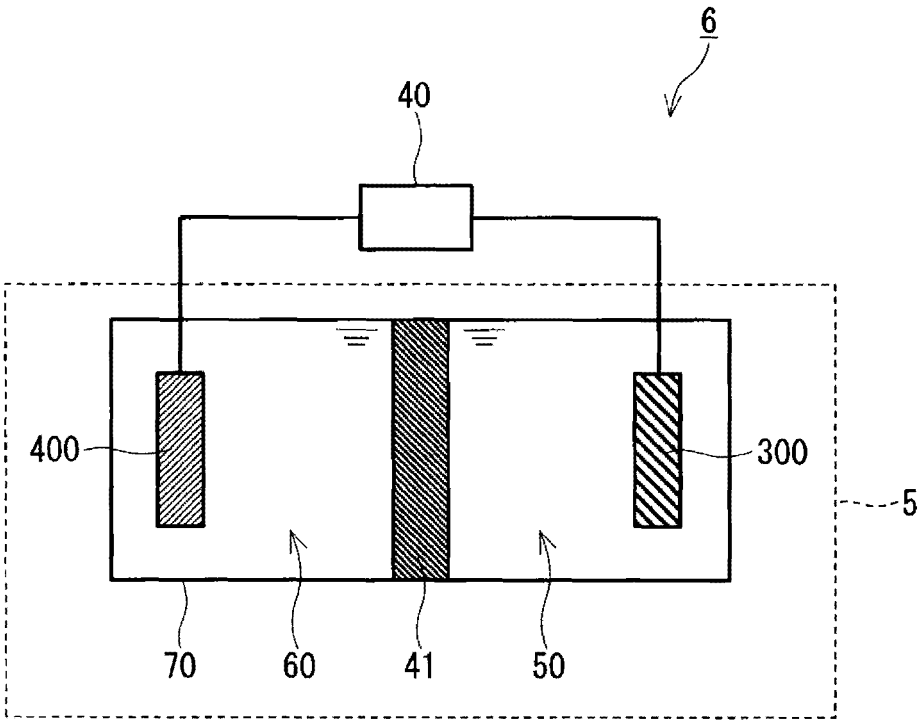

FIG. 9

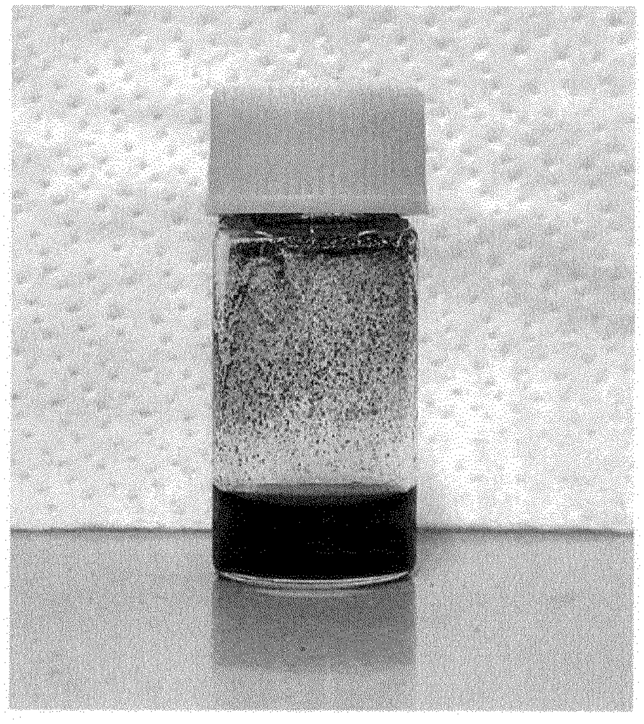

FIG. 10

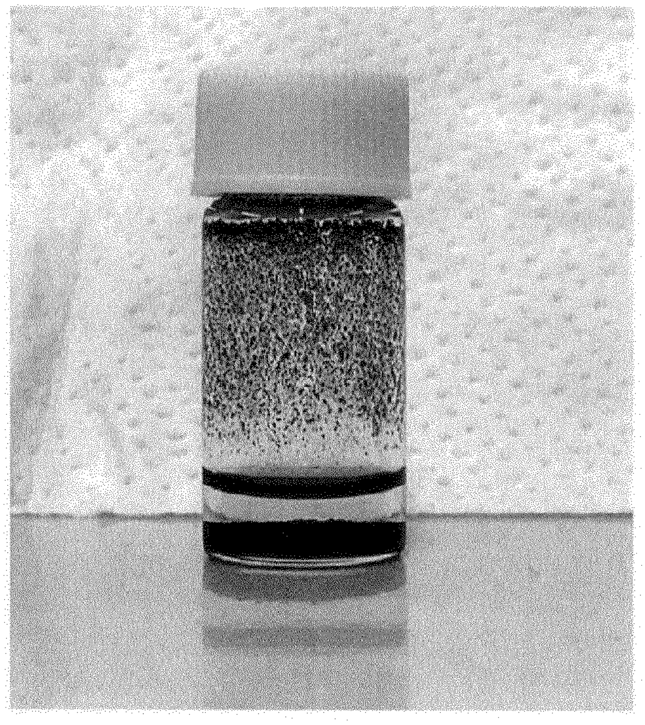

FIG. 11

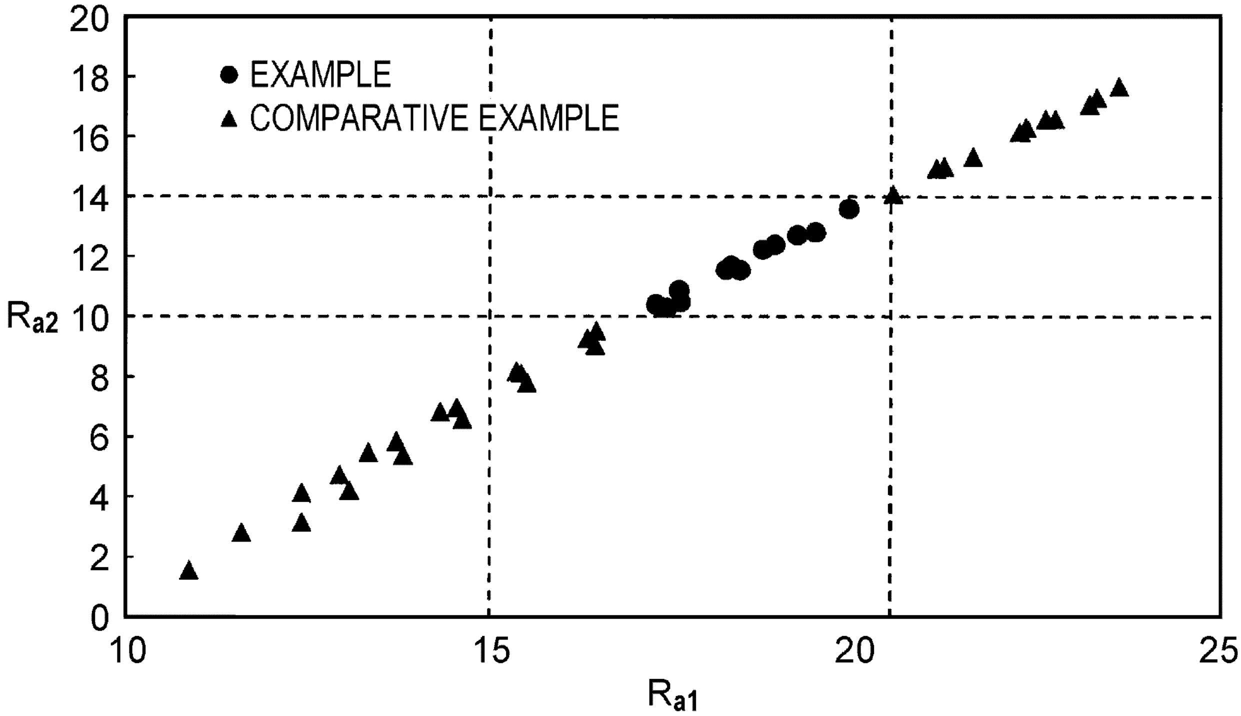
EXAMPLE
COMPARATIVE EXAMPLE
$R_{a2}$
$R_{a1}$
0
2
4
6
8
10
12
14
16
18
20
10
15
20
25

## INTERNATIONAL SEARCH REPORT

International application No.
**PCT/JP2021/035121**

**A. CLASSIFICATION OF SUBJECT MATTER**

***B01J 37/02***(2006.01)i; ***B01J 21/16***(2006.01)i; ***B01J 23/755***(2006.01)i; ***C25B 11/00***(2021.01)i; ***C25B 11/073***(2021.01)i; ***C25B 9/00***(2021.01)i
FI: C25B11/073; C25B9/00 A; B01J37/02 301Z; B01J21/16 M; B01J23/755 M; C25B11/00

According to International Patent Classification (IPC) or to both national classification and IPC

**B. FIELDS SEARCHED**

Minimum documentation searched (classification system followed by classification symbols)

B01J37/02; B01J21/16; B01J23/755; C25B11/00; C25B11/073; C25B9/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-142931 A (TOYOTA MOTOR CORP) 17 August 2017 (2017-08-17) | 1-13 |
| A | JP 2018-139203 A (TOYOTA MOTOR CORP) 06 September 2018 (2018-09-06) | 1-13 |
| A | WO 2019/197513 A1 (TECHNISCHE UNIVERSITAT BERLIN) 17 October 2019 (2019-10-17) | 1-13 |
| A | WO 2020/034007 A1 (NEWSOUTH INNOVATIONS PTY LIMITED) 20 February 2020 (2020-02-20) | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 November 2021** | **07 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/035121**

| Patent document cited in search report | Publication date (day/month/year) | Patent family member(s) | Publication date (day/month/year) |
|---|---|---|---|
| JP 2017-142931 A | 17 August 2017 | (Family: none) | |
| JP 2018-139203 A | 06 September 2018 | (Family: none) | |
| WO 2019/197513 A1 | 17 October 2019 | US 2021/0028465 A1 | |
| WO 2020/034007 A1 | 20 February 2020 | US 2021/0348284 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017142931 A